(19) Europäisches Patentamt
European Patent Office
Office européen des brevets

(11) **EP 4 470 442 A1**

(12) **EUROPEAN PATENT APPLICATION**
published in accordance with Art. 153(4) EPC

(43) Date of publication:
04.12.2024 Bulletin 2024/49

(21) Application number: 23746176.9

(22) Date of filing: 18.01.2023

(51) International Patent Classification (IPC):
*A47L 15/00* (2006.01)

(52) Cooperative Patent Classification (CPC):
A47L 15/00

(86) International application number:
PCT/CN2023/072839

(87) International publication number:
WO 2023/143295 (03.08.2023 Gazette 2023/31)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.01.2022 CN 202210094276
12.10.2022 CN 202211245183

(71) Applicant: Wuhu Midea Smart Kitchen Appliance
Manufacturing Co., Ltd.
Wuhu, Anhui 241000 (CN)

(72) Inventors:
• LIU, Yatao
Wuhu, Anhui 241000 (CN)

• WEI, Zhongke
Wuhu, Anhui 241000 (CN)
• ZHANG, Lixiao
Wuhu, Anhui 241000 (CN)
• ZHAO, Le
Wuhu, Anhui 241000 (CN)
• SHEN, Hebin
Wuhu, Anhui 241000 (CN)
• CHEN, Shiqiong
Wuhu, Anhui 241000 (CN)
• WU, Qijun
Wuhu, Anhui 241000 (CN)
• WANG, Xueqing
Wuhu, Anhui 241000 (CN)

(74) Representative: RGTH
Patentanwälte PartGmbB
Neuer Wall 10
20354 Hamburg (DE)

(54) **DISHWASHER CONTROL METHODS AND APPARATUSES, DISHWASHERS AND COMPUTER STORAGE MEDIUM**

(57)    The present disclosure discloses a method and apparatus for controlling a dishwasher, a dishwasher, and a computer storage medium. The method includes: obtaining an active time set (S201) and operation time of the dishwasher (S202) in a predetermined time period; predicting a tableware taking-out time point of a user based on the active time set and the operation time (S203); and controlling, at a target time point, the dishwasher to perform odor removal processing(S204). The active time set includes at least one active time instance, and each of the at least one active time instance is time at which an occurrence of a human body activity in a predetermined region of the dishwasher is sensed by the human body sensing module. The target time point is a first time length before the tableware taking-out time point. In this solution, the tableware taking-out time point of the user is predicted jointly based on the operation time of the dishwasher and the active time instance at which user performs activities in the vicinity of the dishwasher, and it is realized that the dishwasher is automatically controlled to perform odor removal processing before the tableware is taken out by the user, to remove the odor generated because the tableware is left for too long in the dishwasher after the dishwasher cleans the tableware, which lowers complexity of use of the dishwasher, and improves the user experience.

EP 4 470 442 A1

S201

Obtaining an active time set in a predetermined time period

S202

Obtaining operation time of the dishwasher in the predetermined time period

Predicting a tableware taking-out time point of a user based on the active time set and the operation time

S203

Controlling, at a target time point, the dishwasher to perform odor removal processing, the target time point being a first time length before the tableware taking-out time point

S204

FIG. 2

**Description**

**CROSS-REFERENCE TO RELATED APPLICATION**

This application claims priorities to Chinese Patent Applications No. 202210094276.5, filed on January 26, 2022, entitled "METHOD FOR CONTROLLING DISHWASHER, PROCESSOR, DISHWASHER, AND STORAGE MEDIUM", and No. 202211245183.4, filed on October 12, 2022, entitled "METHOD AND APPARATUS FOR CONTROLLING DISHWASHER, DISHWASHER, AND COMPUTER STORAGE MEDIUM", the entire disclosures of which are incorporated herein by reference.

**TECHNICAL FIELD**

The present disclosure relates to the field of household control technologies, and more specifically, to a method and apparatus for controlling a dishwasher, a dishwasher, and a computer storage medium.

**BACKGROUND**

With the improvement of people's living standards, a dishwasher gradually enters each household. However, after tableware is cleaned by the dishwasher, the odor often occurs because of the tableware is left for too long in the dishwasher, which can lead to a bad experience of a user in a process of taking the tableware out.

**SUMMARY**

Embodiments of the present disclosure provide a method and apparatus for controlling a dishwasher, a dishwasher, and a computer storage medium. A tableware taking-out time point of a user is determined jointly based on the operation time of the dishwasher and the active time of the user. Before the user takes out the tableware, odor removal processing can be automatically started, to remove the odor and improve the user experience. The technical solution is described below.

In a first aspect, the embodiments of the present disclosure provide a method for controlling a dishwasher. The dishwasher includes a human body sensing module. The method includes: obtaining an active time set in a predetermined time period; obtaining operation time of the dishwasher in the predetermined time period; predicting a tableware taking-out time point of a user based on the active time set and the operation time; and controlling, at a target time point, the dishwasher to perform odor removal processing. The active time set includes at least one active time instance at which an occurrence of a human body activity in a predetermined region of the dishwasher is sensed by the human body sensing module. The target time point is a first time length before the tableware taking-out time point.

In a second aspect, the embodiments of the present disclosure provide another method for controlling a dishwasher. The method include: obtaining historical behavior data of the dishwasher in a predetermined time cycle; predicting a taking-out time point of tableware in the dishwasher based on the historical behavior data; and controlling the dishwasher to start a drying function before the taking-out time point.

In a third aspect, the embodiments of the present disclosure provide a apparatus for controlling a dishwasher. The dishwasher includes a human body sensing module. The apparatus for controlling the dishwasher includes: a first obtaining module configured to obtain an active time set in a predetermined time period; a second obtaining module configured to obtain operation time of the dishwasher in the predetermined time period; a prediction module configured to predict a tableware taking-out time point of a user based on the active time set and the operation time; and a first control module configured to control, at a target time point, the dishwasher to perform odor removal processing. The active time set includes at least one active time instance at which an occurrence of a human body activity in a predetermined region of the dishwasher is sensed by a human body sensing module. The target time point is a first time length before the tableware taking-out time point.

In a fourth aspect, the embodiments of the present disclosure provide another apparatus for controlling a dishwasher. The apparatus includes: a fourth obtaining module configured to obtain historical behavior data of the dishwasher in a predetermined time cycle; and a prediction module configured to predict a taking-out time point of tableware in the dishwasher based on the historical behavior data; and a third control module configured to control the dishwasher to start a drying function before the taking-out time point.

In a fifth aspect, the embodiments of the present disclosure provide a dishwasher, including: a memory storing executable program codes; and a processor connected to the memory. The processor is configured to perform, when running a program corresponding to the executable program codes by reading the executable program codes stored in the memory, the method according to the first aspect of the embodiments, or any one of possible implementations of the first aspect, or the second aspect of the embodiments, or any one of possible implementations of the second aspect in this specification.

In a sixth aspect, the embodiments of the present disclosure provide another dishwasher, including: a door control switch configured to detect a door opening state and/or door closing state of the dishwasher and transmit information indicating the door opening state and/or door closing state; a humidity detection device configured to detect a humidity inside the dishwasher; and a processor configured to perform the method according to the second aspect of the embodiments in this specification or any one of the possible implementations of the second aspect in this specification.

In a seventh aspect, the embodiments of the present disclosure provide a computer storage medium. The computer storage medium stores a plurality of instructions. The plurality of instructions is adapted to be loaded by a processor for performing steps of the method according to the first aspect of the embodiments, or any one of the possible implementations of the first aspect, or the second aspect of the embodiments, or any one of the possible implementations of the second aspect in this specification.

Beneficial effects of the technical solutions according to some embodiments of the present disclosure at least include the following content.

In one or more embodiments of the present disclosure, the active time set in the predetermined time period and the operation time of the dishwasher in the predetermined time period are obtained. The active time set includes the at least one active time instance, and each of the at least one active time instance is the time at which the occurrence of the human body activity in the predetermined region of the dishwasher is sensed by the human body sensing module. The tableware taking-out time point of the user is predicted based on the active time set and the operation time. The dishwasher is controlled to perform odor removal processing at the target time point. The target time point is the first time length before the tableware taking-out time point. The tableware taking-out time point of the user is predicted jointly based on the operation time of the dishwasher and the active time instance during user's activities in the vicinity of the dishwasher, to lower complexity of use of the dishwasher. Moreover, it is realized that the dishwasher is automatically controlled to perform odor removal processing before the tableware is taken out by the user, to remove the odor generated because the tableware is left for too long in the dishwasher after the dishwasher cleans the tableware, which improves the user experience.

The above description is merely an overview of the technical solutions of the present disclosure. To facilitate a clear understanding of technical means of the present disclosure and the implementations of the technical solutions in accordance with the contents of the specification, and to clarify and explain the above and other objects, features, and advantages of the present disclosure, specific implementations of the present disclosure will be described below.

BRIEF DESCRIPTION OF THE DRAWINGS

In order to more clearly explain technical solutions of embodiments of the present disclosure, drawings used in the description of the embodiments are briefly described below. Obviously, the drawings as described below are merely some embodiments of the present disclosure. Based on these drawings, other drawings can be obtained by those skilled in the art without inventive effort.

FIG. 1 is a schematic architectural diagram of a system for controlling a dishwasher according to an exemplary embodiment of the present disclosure.
FIG. 2 is a schematic flowchart of a method for controlling a dishwasher according to an exemplary embodiment of the present disclosure.
FIG. 3 is a schematic diagram of an implementation process of predicting a tableware taking-out time point of a user according to an exemplary embodiment of the present disclosure.
FIG. 4 is a schematic diagram of another implementation process of predicting a tableware taking-out time point of a user according to an exemplary embodiment of the present disclosure.
FIG. 5 is a schematic diagram of an active time set and operation time in a predetermined time period according to an exemplary embodiment of the present disclosure.
FIG. 6 is a schematic flowchart of another method for controlling a dishwasher according to an exemplary embodiment of the present disclosure.
FIG. 7 is a schematic flowchart of another method for controlling a dishwasher according to an exemplary embodiment of the present disclosure.
FIG. 8 is a schematic flowchart of another method for controlling a dishwasher according to an exemplary embodiment of the present disclosure.
FIG. 9 is a schematic flowchart of a step of predicting a taking-out time point according to an exemplary embodiment of the present disclosure.
FIG. 10 is a schematic flowchart of another method for controlling a dishwasher according to an exemplary embodiment of the present disclosure.
FIG. 11 is a structural block diagram of dishwasher control according to an exemplary embodiment of the present disclosure.

FIG. 12 is a structural block diagram of a system for controlling a dishwasher according to an exemplary embodiment of the present disclosure.

FIG. 13 is a schematic structural diagram of another apparatus for controlling a dishwasher according to an exemplary embodiment of the present disclosure.

FIG. 14 is a schematic structural diagram of a dishwasher according to an exemplary embodiment of the present disclosure.

## DETAILED DESCRIPTION

In order to make features and advantages of the present disclosure more obvious and understandable, technical solutions according to embodiments of the present disclosure will be described clearly and completely below in combination with accompanying drawings of the embodiments of the present disclosure. Obviously, the embodiments described below are only a part of the embodiments of the present disclosure, rather than all embodiments of the present disclosure. On a basis of the embodiments of the present disclosure, all other embodiments obtained by those skilled in the art without inventive labor shall fall within the protection scope of the present disclosure.

It should be noted that terms "first", "second", and "third" in the specification and claims of the present disclosure and the above drawings are used to distinguish different objects, rather than to describe an exemplary sequence. In addition, terms "include", "have", and any variations thereof are intended to cover non-exclusive inclusions. For example, a process, a method, a system, a product, or a device that includes a series of steps or units is not limited to those clearly listed steps or units, but optionally further includes steps or units that are not listed, or optionally further includes steps or units that are inherent to the process, the method, the product, or the device.

Odor is often generated after a dishwasher cleans tableware and the tableware is left in the dishwasher for too long, which can lead to a bad experience for a user in a process of taking out tableware. In a relevant dishwasher control technology, it is often necessary for the user to manually control the dishwasher to perform odor removal processing, or to control the dishwasher to perform odor removal processing at some time points through an application (APP) on a terminal associated with the dishwasher. However, it takes a predetermined amount of time for the dishwasher to perform the odor removal processing. When the user wants to take the tableware, in a case where the user still needs to manually control the dishwasher to perform the odor removal processing to ensure that the tableware can be taken out in a better environment, it will lead to the user not being able to take out the tableware immediately, and thus increase complexity of user's use of the dishwasher. Meanwhile, the majority of users tend to easily forget or will not be able to control the dishwasher at some time points through the APP on the terminal associated with the dishwasher to perform odor removal processing, which will result in the odor, which could be smelled by the user when the user takes out the tableware, generated because the tableware is left for too long in the dishwasher after the dishwasher cleans the tableware , making the user have a bad experience during the process of taking out the tableware from the dishwasher.

Based on this, the embodiments of the present disclosure provide a method for controlling a dishwasher, which can predict a tableware taking-out time point of the user jointly based on the operation time of the dishwasher and the active time instance during user's activities in the vicinity of the dishwasher, lowering the complexity of the use of the dishwasher. Moreover, it is realized that the dishwasher is automatically controlled to perform the odor removal processing before the tableware is taken out by the user, to remove the odor generated because the tableware is left for too long in the dishwasher after the dishwasher cleans the tableware, which improves the user experience.

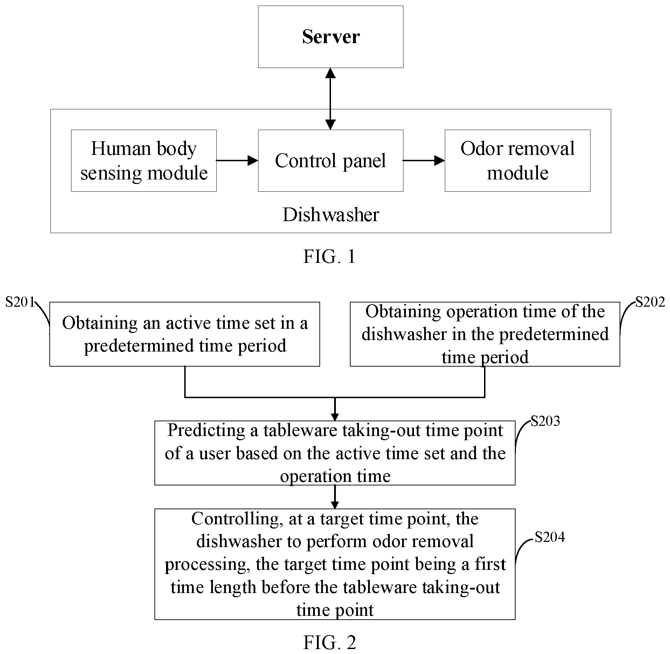

Next, referring to FIG. 1, FIG. 1 is a schematic diagram of an architecture of a system for controlling a dishwasher according to an exemplary embodiment of the present disclosure. As shown in FIG. 1, the system for controlling the dishwasher may include a dishwasher and a server.

The dishwasher may be a device capable of automatically cleaning the tableware such as bowls, chopsticks, plates, dishes, knives, and forks. The dishwasher may include, but is not limited to, a human body sensing module, a control panel, and an odor removal module mounted on the dishwasher. The human body sensing module is used for sensing an occurrence of a human body activity in a predetermined region of the dishwasher, and may include, but is not limited to, a microwave radar sensor, a pyroelectric sensor, and the like. The above-described predetermined region may be, but is not limited to, a region at a distance of smaller than or equal to 0.4 meters, 0.2 meters, or the like from the dishwasher. The control panel is connected to the human body sensing module and the odor removal module and is used for obtaining time at which the occurrence of the human body activity in the predetermined region of the dishwasher is sensed by the human body sensing module, i.e., an active time set, and counting (obtaining) the operation time of the dishwasher within the predetermined time period, and then predicting the tableware taking-out time point of the user based on the active time set and the operation time, and finally turning on the odor removal module of the dishwasher, i.e., controlling the dishwasher to perform the odor removal processing, at a target time point, i.e., a time point that is a first time length before the tableware taking-out time point. In another exemplary embodiment of the present disclosure, the dishwasher may establish a data relationship with a network and establish a data connection relationship with the server through the network, such as transmitting the active time set in the predetermined time period and the operation time of the dishwasher.

The server may be a server capable of providing a variety of dishwasher controls, and may obtain, through the network, the time at which the occurrence of the human body activity in the predetermined region of the dishwasher is sensed by the human body sensing module in the predetermined time period, i.e., the active time set, and obtain the operation time of the dishwasher in the predetermined time period, and then predict the tableware taking-out time point of the user based on the active time set and the operation time, and finally transmit, at the target time point, i.e., at the time point that is the first time length before the tableware taking-out time point, an odor removal instruction to the dishwasher to control the control panel of the dishwasher to turn on the odor removal module of the dishwasher, i.e., to control the dishwasher to perform the odor removal processing. The above server may be, but is not limited to, a hardware server, a virtual server, a cloud server, and the like.

The network may be a medium providing a communication link between the dishwasher and the server, or may be the Internet including a network device and a transmission medium, which is not limited herein. The transmission medium may be a wired link, such as, but not limited to, coaxial cable, fiber optics, and digital subscriber line (DSL), or a wireless link, such as, but not limited to, wireless fidelity (WIFI), bluetooth, and a mobile device network.

It can be undestood that a number of dishwashers and a number of servers in the system for controlling the dishwasher shown in FIG. 1 are intended as an example only. In specific implementations, any number of dishwashers and any number of servers may be included in this system for controlling the dishwasher. This is not limited specifically by the embodiments of the present disclosure. For example, the servers may be, but are not limited to, a cluster of servers consisting of a plurality of servers.

Next, a method for controlling a dishwasher according to an embodiment of the present disclosure is described in combination with FIG. 1. In an exemplary embodiment of the present disclosure, please refer to FIG. 2, which shows a schematic flowchart of a method for controlling a dishwasher according to an exemplary embodiment of the present disclosure. As shown in FIG. 2, the method for controlling the dishwasher includes the following steps.

At S201, an active time set is obtained in a predetermined time period.

In an exemplary embodiment of the present disclosure, when mounting of the dishwasher is completed, the active time set in the predetermined time period can be obtained by the human body sensing module mounted on the dishwasher. The above active time set includes at least one active time instance. The active time instance is the time at which the occurrence of the human body activity in the predetermined region of the dishwasher is sensed by the human body sensing module. The predetermined time period may be, but is not limited to, 3 days, a week or a month, and the like, and the embodiments of the present disclosure are not limited thereto. The above-described predetermined region may be, but is not limited to, a region at a distance of smaller than or equal to 0.4 meters or 0.2 meters from the dishwasher.

It can be understood that when the user perform an activity in the vicinity of the dishwasher (in the predetermined region), it indicates that the user is likely to want to take out the tableware from the dishwasher, and the tableware taking-out time point of the user can be predicted based on the active time set in the predetermined time period.

At S202, operation time of the dishwasher in the predetermined time period is obtained.

In an exemplary embodiment of the present disclosure, when the mounting of the dishwasher is completed, in addition to obtaining the active time set in the predetermined time period, the operation time of the dishwasher in the predetermined time period will also be obtained. The operation time may include, but is not limited to, a first time point at which the dishwasher starts to operate, a second time point at which the operation of the dishwasher ends, and the like.

It can be understood that there may be one or more first time points in the predetermined time period at which the dishwasher starts a dishwashing operation or second time points in the predetermined time period at which the dishwasher ends a dishwashing operation, which specifically correspond to a number of times of actual use of the dishwasher by the user for washing the tableware in the predetermined time period.

At S203, a tableware taking-out time point of a user is predicted based on the active time set and the operation time.

In another exemplary embodiment of the present disclosure, the above predetermined time period includes N cycles. The tableware taking-out time point is used for characterizing a time point at which the user is likely to take out the tableware in a single cycle. N is a positive integer greater than 1. The above cycle may be a day, a week, a month, and the like, which is not limited by the embodiments of the present disclosure.

Exemplarily, in response to obtaining the active time set in 7 days (7 cycles) and the operation time of the dishwasher in these 7 days, the tableware taking-out time point of the user every day may be predicted based on the active time set and the operation time in these 7 days.

Further, the operation time may include an operation time period of the dishwasher in the predetermined time period. After the active time set and the operation time of the dishwasher in the predetermined time period are obtained, the tableware taking-out time point of the user may be predicted directly based on active time instances outside the operation time period of the dishwasher. The tableware taking-out time point may be, but is not limited to, an active time instance in a highest number within the active time set in the predetermined time period that are outside the operation time period of the dishwasher.

Exemplarily, in a case where the active time set within the 7 days (7 cycles) includes 12 o'clock on the first day, 12 o'clock on the second day, 12 o'clock on the third day, 12 o'clock on the fourth day, 12 o'clock on the fifth day, and 14 o'clock on the sixth day and the seventh day, when the operation time periods of the dishwasher within the 7 days (7 cycles) are a time period from 11 o'clock to 13 o'clock on the third day and a time period from 13 o'clock to 15 o'clock on the sixth day, it can be known that within the active time instances other than the operation time periods of the dishwasher in these 7 days, the active time instance in the largest number which is four is 12 o'clock. In this way, it can be predicted that the user is likely to take out the tableware at 12 o'clock every day, i.e., the tableware taking-out time point can be determined as 12 o'clock.

It can be understood that one or more tableware taking-out time points may be provided. A plurality of tableware taking-out time points may be tableware taking-out time points corresponding to different cycles or different predetermined time periods, for example, but not limited to, predicting a tableware taking-out time point of the user for each of the following weekdays based on the active time set and the operation time in the five days from Monday to Friday (weekdays), and predicting a tableware taking-out time point of the user for each weekend based on the active time set and the operation time in a plurality of weekends.

In another exemplary embodiment of the present disclosure, the above-described predetermined time period includes N cycles, and each cycle includes M consecutive time periods with an equal time length. In practice, an active time instance or tableware taking-out time point of the user in each cycle is likely to be different. For example, a case where the user appears in the predetermined region of the dishwasher at 12 o'clock today for activity and the user appears in the predetermined region of the dishwasher at 5 minutes past 12 o'clock tomorrow may occur. Therefore, in order to ensure accuracy of the dishwasher control, and to ensure that the dishwasher can be controlled to perform the odor removal processing before the user takes out the tableware, the above tableware taking-out time point may be used to characterize a starting time point of at least one of the above M time periods at which the user is likely to take out the tableware. The above N and M are each positive integers greater than one. The above cycle may be a day, a week, a month, and the like, which are not limited by the embodiments of the present disclosure. When the cycle is a day, a time length corresponding to each of the above M time periods may be 1 hour, 30 minutes, or the like, which are not limited by the embodiments of the present disclosure.

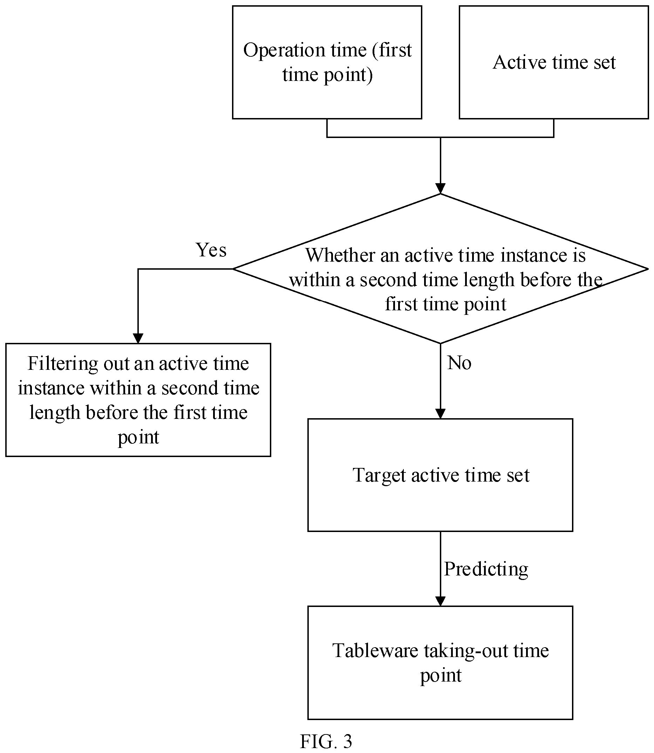

In another exemplary embodiment of the present disclosure, the operation time includes a first time point at which the dishwasher starts to operate. Since an active time instance that occurs in a period of time before the first time point at which the dishwasher starts to operate is likely to be an active time instance at which the user puts the tableware to be washed, rather than an active time instance at which the user takes out the tableware after the dishwasher has washed the tableware, in order to avoid the influence of the active time instance generated when the user puts the tableware on a prediction accuracy of the tableware taking-out time point, the implementation of the predicting the tableware taking-out time point of the user based on the active time set and the operation time in the above-described S203 may be as shown in FIG. 3. After the active time set and the operation time in the predetermined time period are obtained, it can be determined whether the active time instance in the active time set is in the second time length before the first time point at which the operation starts. In response to an active time instance in the active time set being within the second time length before the first time point, the active time instance in the active time set can be filtered out, to obatin a target active time set where none of the active time instances are within the second time length before the first time point. The above second time length may be 30 minutes, 1 hour, or the like, which are not limited by the embodiments of the present disclosure. Then, the tableware taking-out time point of the user may be predicted directly based on the target active time set, and a more accurate tableware taking-out time point may be obtained through the target active time set when the user is more likely to take out the tableware, to realize more accurate control of the dishwasher for the odor removal processing.

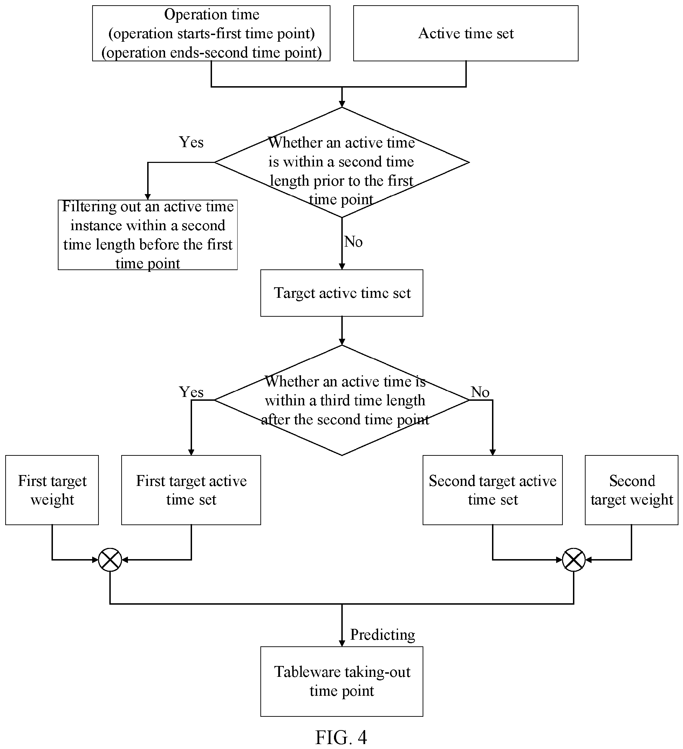

Further, the operation time further includes the second time point at which the operation of the dishwasher ends. When the user appears for activity in the predetermined region of the dishwasher within a period of time after the second time point at which the operation of the dishwasher ends, the user is likely to need to take out the tableware, i.e., it is more probable that the active time instance appearing within a period of time after the second time point at which the operation of the dishwasher ends is the active time instance at which the user takes out the tableware than active time instances. Therefore, in order to further ensure the accuracy of the predicted tableware taking-out time, the implementation of predicting the tableware taking-out time point of the user based on the active time set and the operation time in the above S203 may be as shown in FIG. 4, i.e., after the target active time set is obtained by filtering out the active time instance within the second time length before the first time point, the implementation of predicting the tableware taking-out time point of the user based on the target active time set as described above may be: dividing the target active time set into a first target active time set and a second target active data set based on the second time point, and determining the tableware taking-out time point of the user based on the first target active time set, and a first target weight corresponding to the first target active time set, and the second target active time set, and a second target weight corresponding to the second target active time set.

The first target active time set includes one or more active time instances within a third time length after the second time point within the target active time set, and the second target active data set includes one or more active time instances not within the third time length after the second time point within the target active time set. Equivalently, it may be determined whether the active time instance in the target active time set is within the third time length after the second time point at which the operation of the dishwasher ends. Moreover, all active time instances in the target active time set that are within the third time length after the second time point at which the operation of the dishwasher ends are put into the first target active time set, and all active time instances that are not within the third time length after the second time point at which the operation of the dishwasher ends are put into the second target active time set. Then, weighting is performed on the first target active time set and the corresponding first target weight, and weighting is performed on the second target active time set and the corresponding second target weight. Finally, the tableware taking-out time point is predicted jointly based on the weighted first target active time set and the weighted second target active time set. The above-mentioned tableware taking-out time point may be a starting time point of at least one of the M time periods which has a highest sum of weights of respective active time instances within each time period corresponding to the N time periods. The first target weight is greater than the second target weight. Since it is more likely that the active time instance in the first target active time set within the third time period after the second time point is the corresponding active time instance when the user takes out the tableware, a higher weight can be set for the first target active time set. In this way, the first target active time set is made occupy a more important position in a process of predicting the tableware taking-out time point, which ensures the accuracy of the predicted tableware taking-out time point, and further improves accuracy and effectiveness of the dishwasher control.

It can be understood that the above third time length may be equal to the second time length, or may be greater or smaller than the second time length, which is not limited by the embodiments of the present disclosure.

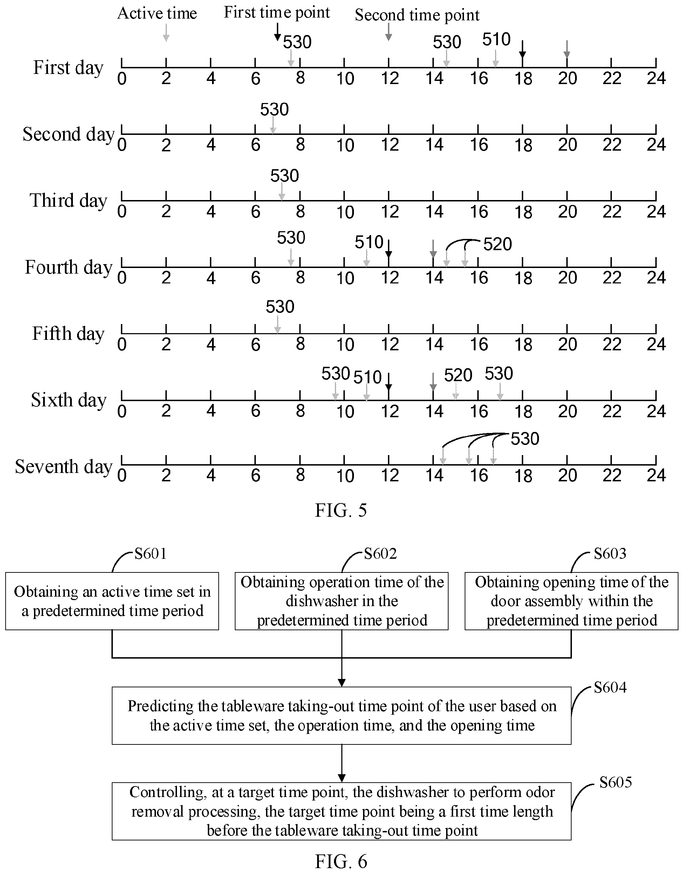

Exemplarily, each day may be divided into 12 consecutive time periods, and each time period corresponds to a time length of 2 hours. After the active time set and the operation time (the first time point at which the operation starts and the second time point at which the operation ends) within the 7 days (the predetermined time period) as shown in FIG. 5 are obtained, an active time instance 510 within 2 hours (the second time length) before the first time point within the 7 days may be filtered out first to obtain the target active time set, and then the target active time set is divided into a first target active time set consisting of an active time instance 520 within 2 hours (the third time length) after the second time point and a second target active time set consisting of other active time instances 530 that are not within 2 hours (the third time length) after the second time point. When the first target weight is 1.5 and the second target weight is 1, the active time instances corresponding to each time period within the 7 days can be weighted and added based on the first target active time set and second target active time set to obtain that: a weighted and added result of the active time instances corresponding to a time period from 6 o'clock to 8 o'clock is 5, a weighted and added result of the active time instances corresponding to a time period from 8 o' clock to 10 o'clock is 1, a weighted and added result of the active time instances corresponding to a time period from 10 o'clock to 12 o'clock is 0, a weighted and added result of the active time instances corresponding to a time period from 14 o'clock to 16 o'clock is 7.5, a weighted and added result of the active time instances corresponding to a time period from 16 o'clock to 18 o'clock is 2, and a weighted and added result of the active time instances corresponding to the rest of the time periods is 0. In this case, it can be assumed that the user has the greatest possibility to take the tableware within the time period from 14 o'clokc to 16 o'clock every day. Therefore, it can be determined that the tableware taking-out time point is 14 o'clock. Moreover, at a time point that is the first time length (e.g., but not limited to, 30 minutes, 20 minutes) before 14:00 every day, the dishwasher is controlled to perform the odor removal processing, to ensure as much as possible that the odor in the dishwasher can be removed before the user takes out the tableware.

At S203, after the tableware taking-out time point of the user is predicted based on the active time set and the operation time, as shown in FIG. 2, the method for controlling the dishwasher further includes the following step.

At S204, the dishwasher is controlled at a target time point to perform odor removal processing. The target time point is a first time length before the tableware taking-out time point.

In an exemplary embodiment of the present disclosure, since a predetermined amount of time is required for the odor removal processing to remove the odor in the dishwasher, in order to ensure that the odor in the dishwasher has all been removed when the user takes out the the tableware, the dishwasher may be started to be controlled to perform the odor removal processing whenever the predicted time point that is the first time length before the tableware taking-out time point, i.e., the target time point, has been reached.

In another exemplary embodiment of the present disclosure, because the dishwasher generally has a storage function, i.e., when dishwashing is not performed, the dishwasher will turn on internal hot air drying and cold air circulation function to achieve a sterilization effect. When the storage function of the dishwasher is not turned on and the dishwasher is controlled to turn on the odor removal module, an odor removal effect cannot be achieved. Therefore, in order to avoid a waste of power consumption of the dishwasher caused by an ineffective odor removal processing, whether the storage function of the dishwasher has been turned on may be confirmed before the dishwasher is controlled to perform the odor removal processing. In response to the storage function of the dishwasher being turned on, the dishwasher is controlled to perform the odor removal processing. In response to the storage function of the dishwasher not being turned on, the user may be prompted to turn on the storage function.

In an embodiment of the present disclosure, the active time set in the predetermined time period and the operation time of the dishwasher in the predetermined time period are obtained. The active time set includes the at least one active time instance, and each of the at least one active time instance is the time at which the occurrence of the human body activity in the predetermined region of the dishwasher is sensed by the human body sensing module. The tableware taking-out time point of the user is predicted based on the active time set and the operation time. The dishwasher is controlled to perform the odor removal processing at the target time point. The target time point is the first time length before the tableware taking-out time point. The tableware taking-out time point of the user is predicted jointly based on the operation time of the dishwasher and the active time instance at which the user performs an activity in the vicinity of the dishwasher. In this way, it is realized that the dishwasher is automatically controlled to perform the odor removal processing before the tableware is taken out by the user, to remove the odor generated because the tableware is left for too long in the dishwasher after the dishwasher cleans the tableware, which lowers the complexity of the use of the dishwasher and improves the user experience.

Next, FIG. 6 is a schematic flowchart of another method for controlling a dishwasher according to an exemplary embodiment of the present disclosure. As shown in FIG. 6, the method for controlling the dishwasher includes the following steps.

At S601, the active time set in the predetermined time period is obtained.

In an exemplary embodiment of the present disclosure, S601 is the same as S201, and details are omitted herein.

At S602, the operation time of the dishwasher in the predetermined time period is obtained.

In an exemplary embodiment of the present disclosure, S602 is the same as S202, and details are omitted herein.

At S603, opening time of a door assembly of the dishwasher within the predetermined time period is obtained.

In an exemplary embodiment of the present disclosure, when the mounting of the dishwasher is completed, in addition to obtaining the active time set in the predetermined time period and the operation time of the dishwasher, the opening time of the door assembly of the dishwasher in the predetermined time period of the dishwasher will also be obtained.

It can be understood that the opening time of the door assembly of the dishwasher described above may be the time at which the user places the tableware or the time at which the user takes out the tableware.

At S604, the tableware taking-out time point of the user is predicted based on the active time set, the operation time, and the opening time.

In an exemplary embodiment of the present disclosure, corresponding weights may be set for each active time instance in the active time set and each opening time instance based on the operation time, and then the tableware taking-out time point of the user may be predicted in a manner similar to that described above in S203. Details are omitted herein.

Since it is more likely that the user will take out the tableware when the door assembly of the dishwasher is open than when the occurrence of the human activity is sensed in the predetermined region of the dishwasher, but user's tableware taking-out data, i.e., the opening time instance of the door assembly of the dishwasher, is less in a short period of time, in order to allow the user to both use the function quickly and ensure the accuracy of the predicted tableware taking-out time, a data chain can be increased by utilizing the active time set in the predetermined time period. Moreover, in combination with the operation time, the tableware taking-out time point of the user is predicted jointly through the opening time with a higher weight, making the control of the dishwasher more accurate and effective.

Further, the operation time includes the first time point at which the dishwasher starts to operate. In order to avoid the influence of the opening time of the door assembly generated when the user places the tableware on the prediction of the tableware taking-out time point, and to improve the effectiveness of controlling the dishwasher for the odor removal processing, at S604, the prediction of the tableware taking-out time point of the user based on the active time set, the operation time, and the opening time may be: filtering out opening time in the opening time of the door assembly that is within a fourth time length before the first time point to obtain target opening time, and then predicting the tableware taking-out time point of the user based on the active time set, the operation time, and the target opening time. The fourth time length may be, but is not limited to, 30 minutes, 20 minutes, and the like. The above prediction process is similar to the process shown in FIG. 4, i.e., the tableware taking-out time point of the user can finally be predicted jointly based on the first target active time set in the active time set and the corresponding first target weight, the second target active time set and the corresponding second target weight, the target opening time and the corresponding third target weight. The third target weight is greater than the first target weight, and the first target weight is greater than the second target weight.

At S605, the dishwasher is controlled to perform the odor removal processing at the target time point. The target time point is a first time length before the tableware taking-out time point.

In an exemplary embodiment of the present disclosure, S605 is the same as S204, and details are omitted herein.

In an embodiment of the present disclosure, the active time set in the predetermined time period, the operation time of the dishwasher in the predetermined time period, and the opening time of the door assembly are obtained. The active time set includes the at least one active time instance, and each of the at least one active time instance is the time at which the occurrence of the human body activity in the predetermined region of the dishwasher is sensed by the human body sensing module. The tableware taking-out time point of the user is predicted based on the active time set, the operation time, and the opening time of the door assembly. The dishwasher is controlled to perform the odor removal processing at the target time point. The target time point is the first time length before the tableware taking-out time point.

The data chain is increased through the active time set in the predetermined time period, making the user be able to quickly experience a function of the automatic odor removal processing of the dishwasher. Moreover, the accuracy of the predicted tableware taking-out time point is also ensured by combining with the opening time of the door assembly, to make the dishwasher control more accurate and effective. In this way, it is realized that the dishwasher is automatically controlled to perform the odor removal processing before the tableware is taken out by the user, to remove the odor generated because the tableware is left for too long in the dishwasher after the dishwasher cleans the tableware, which lowers the complexity of the use of the dishwasher and improves the user experience.

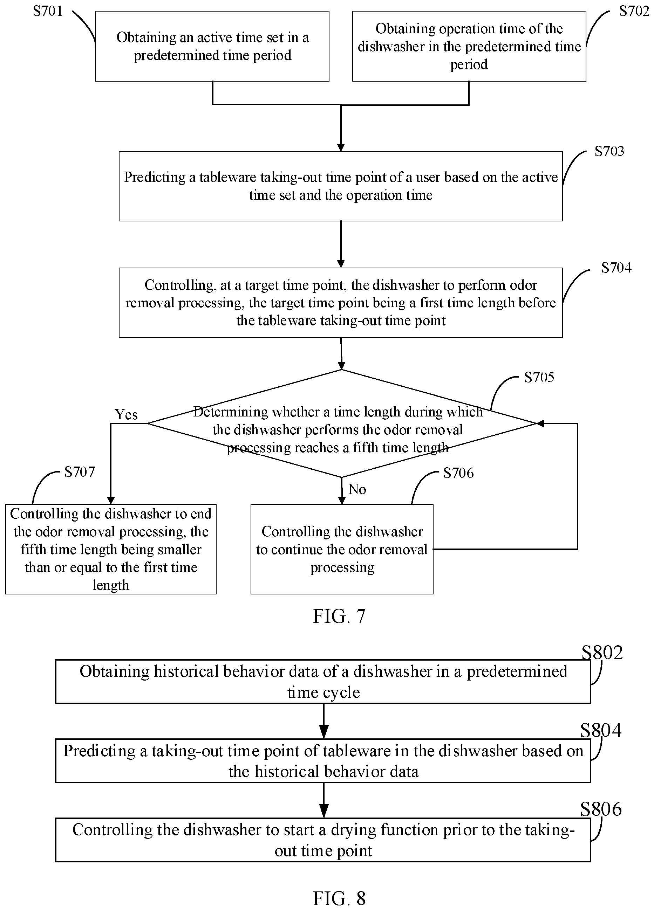

Next, FIG. 7 is a schematic flowchart of another method for controlling a dishwasher according to an exemplary embodiment of the present disclosure. As shown in FIG. 7, the method for controlling the dishwasher includes the following steps.

At S701, the active time set in the predetermined time period is obtained.

In an exemplary embodiment of the present disclosure, S701 is the same as S201, and details are omitted herein.

At S702, the operation time of the dishwasher in the predetermined time period is obtained.

In an exemplary embodiment of the present disclosure, S702 is the same as S202, and details are omitted herein.

At S703, the tableware taking-out time point of the user is predicted based on the active time set and the operation time.

In an exemplary embodiment of the present disclosure, S703 is the same as S203, and details are omitted herein.

At S704, the dishwasher is controlled at the target time point to perform odor removal processing. The target time point is the first time length before the tableware taking-out time point.

In an exemplary embodiment of the present disclosure, S704 is the same as S204, and details are omitted herein.

At S705, it is determined whether a time length during which the dishwasher performs the odor removal processing reaches a fifth time length.

In an exemplary embodiment of the present disclosure, after the dishwasher is controlled to perform the odor removal processing at the target time point, it may be further determined whether the time length during which the dishwasher performs the odor removal processing reaches the fifth time length. The fifth time length may be 20 minutes, 25 minutes, and the like, which may be set according to actual situations, and is not limited by the embodiments of the present disclosure.

At S706, the dishwasher is controlled to continue the odor removal processing.

In an exemplary embodiment of the present disclosure, in response to the time length during which the dishwasher performs the odor removal processing not reaching the fifth time length, which is indicated that the odor inside the dishwasher is not completely removed, the dishwasher will be controlled to continue to perform the odor removal processing.

At S707, the dishwasher is controlled to end the odor removal processing after the time length during which the dishwasher performs the odor removal processing reaches the fifth time length, and the fifth time length is smaller than or equal to the first time length.

In an exemplary embodiment of the present disclosure, in response to the time length during which the dishwasher performs the odor removal processing reaching the fifth time length, which is indicated that the odor inside the dishwasher has been completely removed, the dishwasher can be controlled to end the odor removal processing, i.e., the odor removal module can be turned off. In order to ensure that the odor inside the dishwasher has been completely removed when the user takes out the tableware, the fifth time length during which the dishwasher performs the odor removal processing should be smaller than the first time length, i.e., it is realized that before the user takes out the tableware, the dishwasher is automatically controlled to complete an odor removal processing operation, to completely remove the odor that is generated because the tableware is left for too long in the dishwasher after the dishwasher cleans the tableware, which lowers the complexity of the use of the dishwasher, and further enhances the user experience.

In another exemplary embodiment of the present disclosure, in addition to predicting the tableware taking-out time point of the user based on the active time set and the operation time in S203 as described above, or predicting the tableware taking-out time point of the user based on the active time set, the operation time, and the opening time in S604, the tableware taking-out time point of the user may also be predicted directly based on the operation time and the opening time of the door assembly of the dishwasher within the predetermined time period, or directly based on the opening time of the door assembly of the dishwasher within the predetermined time period, which is not limited by the present disclosure.

Next, FIG. 8 shows a schematic flowchart of another method for controlling a dishwasher according to an exemplary embodiment of the present disclosure. As shown in FIG. 8, the method being applied in a processor of a dishwasher is taken as an example for illustration, and the method for controlling the dishwasher may include the following steps.

At S802, historical behavior data of a dishwasher in a predetermined time cycle is obtained.

It can be understood that the historical behavior data is historical usage behavior information of the dishwasher, which may include, for example, function usage behavior information. The predetermined time cycle is a pre-set time cycle, such as one month or four weeks.

In an exemplary embodiment of the present disclosure, the processor may obtain the historical behavior data of the dishwasher within the predetermined time cycle (e.g., four weeks).

At S804, a taking-out time point of tableware in the dishwasher is predicted based on the historical behavior data.

It can be understood that the taking-out time point of the tableware in the dishwasher is a time node at which the user takes out the tableware.

In an exemplary embodiment of the present disclosure, the processor may learn a use behavior of the dishwasher in the past predetermined time cycle (e.g., four weeks) based on the historical behavior data in the predetermined time cycle, and the use behavior of the dishwasher may include information such as the a door opening behavior or a door closing behavior of the dishwasher, a function use behavior, and a drying behavior, to predict the taking-out time point of the tableware in the dishwasher, i.e., to determine the time node at which the user often takes out the tableware. Further, the processor may learn the use behavior of the dishwasher in the predetermined time cycle (e.g., four weeks) in the past through a corresponding predictive algorithm model.

At S806, the dishwasher is controlled to start a drying function before the taking-out time point.

In an exemplary embodiment of the present disclosure, after the taking-out time point of the tableware in the dishwasher is predicted by the processor, the processor may control the dishwasher to start the drying function before the taking-out time point, i.e., the tableware is dried in advance before the user takes out the tableware, which prevents the tableware taken by the user when opening the dishwasher from being wet tableware covered with water droplets, and improves the user experience.

According to the method for controlling the dishwasher, the historical behavior data of the dishwasher within a predetermined time cycle is obtained and the taking-out time point of the tableware in the dishwasher is predicted based on the historical behavior data, the dishwasher is controlled to start the drying function before the taking-out time point. The above technical solution solves the problem of a large degree of user dependence in the existing dishwasher, greatly reduces a degree of dependence on the user. The taking-out time point of the tableware in the dishwasher is predicted based on the historical behavior data of the dishwasher, and the dishwasher is controlled to start the drying function in advance to perform drying, and thus it is not affected by a phenomenon of moisture regaining. Moreover, the user does not need to start the drying function manually, and tableware that is dry and without oder can be used, which improves a use experience of the user.

In an embodiment, the historical behavior data includes historical door opening data and/or historical door closing data and historical cleaning data. The historical door opening data and/or the historical door closing data including one or more historical door opening time points and/or one or more historical door closing time points. Said obtaining the historical behavior data of the dishwasher in the predetermined time cycle includes: dividing each day in the predetermined time cycle into a plurality of time zones; obtaining one or more historical door opening time points and/or one or more historical door closing time points and historical cleaning data of the dishwasher in each of the plurality of time zones; and determining a number of times of historical door opening and/or a number of times of historical door closing in each of the plurality of time zones based on the one or more historical door opening time points and/or the one or more historical door closing time points in the time zone.

It can be understood that the historical door opening data and/or the historical door closing data are historical door opening information and/or historical door closing information of the dishwasher, and the historical door opening time point and/or the historical door closing time point are a historical door opening time node and/or a historical door closing time node of the dishwasher. The historical cleaning data is information related to a historical cleaning behavior of the dishwasher, such as historical cleaning time. The predetermined time cycle may be in days, such as four weeks. The time zone is a time interval divided according to time. For example, a plurality of time zones may be obtained through dividing by using one hour or half an hour as the time interval.

In an exemplary embodiment of the present disclosure, the processor may divide each day in the predetermined time cycle (e.g., four weeks) into the plurality of time zones. For example, 24 hours in each day may be divided into 48 time zones, with 30 minutes in each time zone, and the processor may obtain one or more historical door opening time points and/or one or more historical door closing time points of the dishwasher in each time zone and historical cleaning data in each time zone. The historical door opening time point and/or the historical door closing time point may be obtained through detecting a door opening state and/or a door closing state of the dishwasher by a door control switch, and information indicating the door opening state and/or the door closing state is transmitted by the door control switch and the processor obtains the information to form the historical door opening data and/or the historical door closing data. The historical door opening data and/or the historical door closing data includes the historical door opening time point and/or the historical door closing time point. The processor may determine the number of times of historical door opening and/or the number of times of historical door closing in each of the time zones based on the historical door opening time point and/or the historical door closing time point in each of the time zones, i.e., count the number of times of historical door opening and/or the number of times of historical door closing in each of the time zones. It's worth noting that since the user usually closes a door of the dishwasher after opening the door of the dishwasher, i.e., a door opening action and a door closing action of the dishwasher correspond to each other, the number of times of historical door opening and/or the number of times of historical door closing may be considered to be the same.

Further, the division of each day of the predetermined time cycle into the plurality of time zones may include division with an equal time interval and/or division with unequal time intervals. The division with an equal time interval may specifically be dividing each day by using one hour or half an hour as the time interval. The division with unequal time intervals may specifically be dividing time periods (e.g., in the morning, at noon, and in the evening) finely during which the user frequently uses the dishwasher, and dividing time periods (e.g., at night) coarsely during which the user infrequently uses the dishwasher. A number of time zones obtained through the fine division is greater than a number of time zones obtained through the coarse division.

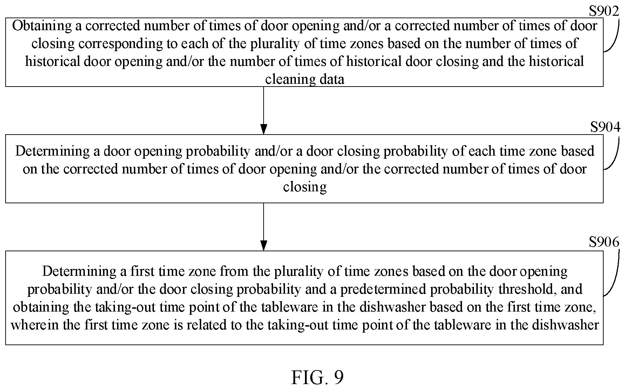

In a possible embodiment, FIG. 9 schematically illustrates a schematic flowchart of a step of predicting a taking-out time point according to an embodiment of the present disclosure. As shown in FIG. 9, said predicting the taking-out time point of the tableware in the dishwasher based on the historical behavior data may include the following steps.

At S902, a corrected number of times of door opening and/or a corrected number of times of door closing corresponding to each of the plurality of time zones are obtained based on the number of times of historical door opening and/or the number of times of historical door closing and the historical cleaning data.

In an exemplary embodiment of the present disclosure, the processor may correct the number of times of historical door opening and/or the number of times of historical door closing within each time zone based on the number of historical times of door opening and/or the number of times of historical door closing within each time zone and the historical cleaning data within each time zone to obtain the corrected number of times of door opening and/or the corrected number of times of door closing corresponding to each time zone.

In a possible embodiment, the historical cleaning data includes a historical cleaning time length; and said obtaining the corrected number of times of door opening and/or the corrected number of times of door closing corresponding to the time zone based on the number of times of historical door opening and/or the number of times of historical door closing and the historical cleaning data includes: when the historical cleaning time length is greater than or equal to a predetermined cleaning time length, determining that the historical door opening data and/or the historical door closing data corresponds to a tableware taking-out behavior or a tableware placing-in behavior; and in response to the historical door opening data and/or the historical door closing data corresponding to the tableware taking-out behavior, multiplying the number of times of historical door opening and/or the number of times of door closing with a first weight to obtain the corrected number of times of door opening and/or the corrected number of times of door closing corresponding to each time zone; and in response to the historical door opening data and/or the historical door closing data corresponding to the tableware placing-in behavior, subtracting a second predetermined parameter from the number of times of historical door opening and/or the number of times of historical door closing, to obtain the corrected number of times of door opening and/or the corrected number of times of door closing corresponding to each time zone. The first weight is greater than a first predetermined parameter and is related to a position of each time zone in the plurality of time zones and a number of days of each time zone in the predetermined time cycle.

It can be understood that the predetermined cleaning time length is a pre-set minimum cleaning time length of the dishwasher, like 30 minutes. A user's tableware taking-out behavior usually occurs after cleaning, and a user's tableware placing-in behavior occurs before cleaning. Therefore, the tableware taking-out behavior can be viewed as the user's tableware taking-out behavior after cleaning, and the tableware placing-in behavior can be viewed as the user's tableware placing-in behavior before cleaning. The first predetermined parameter is a pre-set value, and its specific value may be set according to the actual situation, such as 1 or 3. The second predetermined parameter is a pre-set value, and its specific value may be set according to the actual situation, for example, which may be 1 or 2. Further, the first predetermined parameter may be the same as or different from the second predetermined parameter.

In an exemplary embodiment of the present disclosure, the processor may compare the historical cleaning time length with the predetermined cleaning time length (e.g., 30 minutes or 20 minutes). In response to determining that the historical cleaning time length is greater than or equal to the predetermined cleaning time length, the processor may determine whether the historical door opening data and/or the historical door closing data corresponds to the tableware taking-out behavior or the tableware placing-in behavior. In response to determining that the historical door opening data and/or the historical door closing data within that time zone corresponds to the tableware taking-out behavior, the processor may multiply the previously-counted number of times of historical door opening and/or the previously-counted number of times of door closing within that time zone with the first weight to obtain the corrected number of times of door opening and/or the corrected number of times of door closing corresponding to the time zone. For example, in response to a number of times of historical door opening (or a number of times of door closing or a number of times of door closing and a number of times of door opening) in the 12th time zone being 2, the corrected number of times of door opening (or the number of times of door closing or the number of times of door closing and the number of times of door opening) in the 12th time zone is a value obtained after multiplying 2 with the first weight. The first weight is greater than the first predetermined parameter (like 1) and is related to a position of each time zone in the plurality of time zones and the number of a day in the predetermined time cycle where each time zone is located, i.e., the first weight corresponding to different numbers of the days in the predetermined time cycle where different time zones are located will change. In response to determining that the historical door opening data and/or the historical door closing data of the time zone corresponding to the tableware placing-in behavior, the processor may subtract the second predetermined parameter (like 2) from the previously-counted number of times of historical door opening and/or the previously-counted number of times of historical door closing corresponding to the time zone, to obtain the corrected number of times of door opening and/or the corrected number of times of door closing corresponding to each time zone.

In an embodiment of the present disclosure, when the historical cleaning time length is greater than or equal to the predetermined cleaning time length, it can be determined that the cleaning behavior is a normal cleaning behavior. At this time, it can be determined whether the historical door opening data and/or the historical door closing data of the time zone corresponds to the tableware taking-out behavior or the tableware placing-in behavior. In response to the historical door opening data and/or the historical door closing data of the time zone corresponds to the tableware taking-out behavior, the first weight may be added to the number of times of historical door opening and/or the number of times of historical door closing within that time zone, and the first weight is greater than the first predetermined parameter and is related to the position of the time zone in the plurality of time zones and the number of a day in the predetermined time cycle where the time zone is located. In response to the historical door opening data and/or the historical door closing data of the time zone corresponds to the tableware placing-in behavior, the second predetermined parameter may be subtracted from the number of times of historical door opening and/or the number of times of historical door closing within that time zone. In the above-described solution, the number of times of door opening and/or the number of times of door closing corresponding to the time zone is modified based on the type of the tableware taking-out behavior or the tableware placing-in behavior, i.e., the corrected number of times of door opening and/or the corrected number of times of door closing corresponding to the time zone with different weights can be obtained by setting the first weight or through the operation of subtracting the second predetermined parameter.

In a possible embodiment, said obtaining the corrected number of times of door opening and/or the corrected number of times of door closing corresponding to each of the time zones based on the number of times of historical door opening and/or the number of times of historical door closing and the historical cleaning data further includes: when the historical cleaning time length is smaller than the predetermined cleaning time length, adding a third predetermined parameter to the number of times of historical door opening and/or the number of times of historical door closing to obtain the corrected number of times of door opening and/or the corrected number of times of door closing corresponding to each of the time zones.

It can be understood that the third predetermined parameter is a pre-set value, and its specific value may be set according to the actual situation. For example, the third predetermined parameter may be 1 or 2.

In an exemplary embodiment of the present disclosure, when the historical cleaning time length is smaller than the predetermined cleaning time length, the processor may determine that the cleaning behavior is not a normal cleaning behavior, such as an interruption of the cleaning behavior. At this time, the processor may add the third predetermined parameter to the number of times of historical door opening and/or the number of times of historical door closing corresponding to the time zone, to obtain the corrected number of times of door opening and/or the corrected number of times of door closing corresponding to the time zone.

In a possible embodiment, the historical cleaning data includes a historical cleaning starting time point and a historical cleaning ending time point; and said determining that the historical door opening data and/or the historical door closing data corresponds to the tableware taking-out behavior or the tableware placing-in behavior includes: when the historical door opening time point and/or the historical door closing time point is later than the historical cleaning ending time point, determining that the historical door opening data and/or the historical door closing data corresponds to the tableware taking-out behavior; and when the historical door opening time point and/or the historical door closing time point is earlier than the historical cleaning starting time point, determining that the historical door opening data and/or the historical door closing data corresponds to the tableware placing-in behavior.

In an exemplary embodiment of the present disclosure, the processor may compare the historical door opening time point and/or the historical door closing time point with the historical cleaning starting time point and the historical cleaning ending time point. When the historical door opening time point and/or the historical door closing time point is later than the historical cleaning ending time point, it is determined that the historical door opening data and/or the historical door closing data corresponds to the tableware taking-out behavior. When the historical door opening time point and/or the historical door closing time point is earlier than the historical cleaning starting time point, it is determined that the historical door opening data and/or the historical door closing data corresponds to the tableware placing-in behavior.

In an embodiment of the present disclosure, by comparing the historical door opening time point and/or the historical door closing time point with the historical cleaning starting time point and the historical cleaning ending time point, it can be determined that a behavior which occurs before the cleaning behavior is the tableware placing-in behavior, and a behavior which occurs after the cleaning behavior is the tableware taking-out behavior.

In an embodiment, said determining that the historical door opening data and/or the historical door closing data corresponds to the tableware taking-out behavior or the tableware placing-in behavior includes: determining a time length between the historical door opening time point and the historical door closing time point based on the historical door opening time point and the historical door closing time point; when the time length is greater than or equal to a first time length threshold, determining that the historical door opening data and/or the historical door closing data corresponds to the tableware placing-in behavior; and when the time length is smaller than the first time length threshold, determining that the historical door opening data and/or the historical door closing data corresponds to the tableware taking-out behavior.

It can be understood that the first time length threshold is a pre-set standard time length between the door opening time point and the door closing time point.

In an exemplary embodiment of the present disclosure, the processor may calculate the time length between the historical door opening time point and the historical door closing time point based on the historical door opening time point and the historical door closing time point, and compare the time length with the first time length threshold. When the time length is greater than or equal to the first time length threshold, the processor may determine that the historical door opening data and/or the historical door closing data corresponds to the tableware placing-in behavior. Otherwise, when the time length is smaller than the first time length threshold, the processor may determine that the historical door opening data and/or the historical door closing data corresponds to the tableware taking-out behavior.

In an embodiment of the present disclosure, the time length between the historical door opening time point and the historical door closing time point may be determined based on the historical door opening time point and the historical door closing time point. A time length of the tableware taking-out behavior after cleaning is usually shorter than a time length of the tableware placing-in behavior before cleaning. By setting the first time length threshold and comparing the time length with the first time length threshold, it can be determined that when the time length between the historical door opening time point and the historical door closing time point is greater than or equal to the first time length threshold, the historical door opening data and/or the historical door closing data corresponds to the tableware placing-in behavior; otherwise, when the time length is smaller than the first time length threshold, the historical door opening data and/or the historical door closing data corresponds to the tableware taking-out behavior.

At S904, the door opening probability and/or the door closing probability of each of the plurality of time zones is determined based on the corrected number of times of door opening and/or the corrected number of times of door closing.

In an exemplary embodiment of the present disclosure, the processor may determine the door opening probability and/or the door closing probability of each time zone based on the corrected number of times of door opening and/or the corrected number of times of door closing corresponding to each time zone. It can be understood that since a door opening action corresponds to a door closing action, the door opening probability and the door closing probability may be viewed as the same.

In a possible embodiment, said determining the door opening probability and/or the door closing probability of each of the plurality of time zones based on the corrected number of times of door opening and/or the corrected number of times of door closing includes: determining a product value of the corrected number of times of door opening and/or the corrected number of times of door closing and a first weight; adding product values of the plurality of time zones to obtain a time zone summed number of times corresponding to the plurality of time zones; adding the time zone summed number of times to obtain a time cycle summed number of times for all the time zones in the predetermined time cycle; and determining a ratio of the time zone summed number of times to the time cycle summed number of times to obtain the door opening probability and/or the door closing probability of each of the plurality of time zones. The first weight is greater than a first predetermined parameter and is related to a position of the time zone in the plurality of time zones and the number of a day in the predetermined time cycle where the time zone is located.

In an exemplary embodiment of the present disclosure, the calculation may be performed with reference to the following formula (1):

$$P_i = \frac{\sum_1^d k_{ij} * m_i}{\sum_1^d \sum_1^n k_{ij} * m_i} \qquad \text{formula (1),}$$

where $k_{ij}$ is a first weight of the i-th time zone on the j-th day within the predetermined time cycle, $m_i$ is a corrected number of times of door opening and/or a corrected number of times of door closing corresponding to the i-th time zone, $P_i$ is a door opening probability and/or a door closing probability of the i-th time zone, n is a total number of the plurality of time zones, and d is a total number of days of the predetermined time cycle.

It can be understood that in the above formula (1), $k_{ij} * m_i$ is the product value of the corrected number of times of door opening and/or the corrected number of times of door closing and the first weight. A numerator portion of the formula (1) represents a sum of the number of times of door opening and/or the number of times of door closing of all days of each time zone (i.e., the time zone summed number of times), and a denominator portion of the formula (1) represents a sum of the number of times of door opening and/or the number of times of door closing of all days of all time zones (i.e., the time cycle summed number of times).

Further, in an embodiment, when the first predetermined parameter is 1, the determination of the first weight may include determining the first weight according to the following formula (2):

$$k_{ij} = 1 + (\frac{i}{n} + \frac{j}{j+1}) \qquad \text{formula (2),}$$

where $k_{ij}$ is the first weight of the $i_{th}$ time zone on the $j_{th}$ day in the predetermined time cycle, and n is the total number of the plurality of time zones.

As can be seen from the above formula (2), the first weight is greater than 1 (at which time the first predetermined parameter is 1) and is related to the position of the time zone in the plurality of time zones (i.e., i in the above formula) and the number of a day in the predetermined time cycle where the time zone is located (i.e., j in the above formula). A magnitude of the first weight $k_{ij}$ increases with an increase of i and increases with an increase of j, i.e., the first weight is positively correlated with the position of the time zone in the plurality of time zones (i.e., i in the above formula) and the number of a day in the predetermined time cycle where the time zone is located (i.e., j in the above formula).

At S906, a first time zone is determined from the plurality of time zones based on the door opening probability and/or the door closing probability and the predetermined probability threshold, to obtain the taking-out time point of the tableware in the dishwasher based on the first time zone. The first time zone is related to the taking-out time point of the tableware in the dishwasher.

It can be understood that the predetermined probability threshold is a pre-set door opening probability, or a pre-set door closing probability, or a pre-set door opening probability and the door closing probability. Since the door opening action corresponds to the door closing action, the door opening probability may be the same as the door closing probability, and the door opening probability and the door closing probability may be the same as the door opening probability or the door closing probability. The first time zone is a time zone related to the taking-out time point of the tableware in the dishwasher.

In an exemplary embodiment of the present disclosure, the processor may compare the door opening probability, or the door closing probability, or the door opening probability and the door closing probability with the predetermined probability threshold, select the door opening probability that reaches the predetermined probability threshold or the door closing probability that reaches the predetermined probability threshold or the door opening probability and the door closing probability that reaches the predetermined probability threshold, determine the first time zone from the plurality of time zones, and determine the taking-out time point of the tableware in the dishwasher based on the first time zone.

In a possible embodiment, said determining the first time zone from the plurality of time zones based on the door opening probability and/or the door closing probability and the predetermined probability threshold includes: comparing the door opening probability and/or the door closing probability with the predetermined probability threshold; and sorting the time zones each having a door opening probability and/or a door closing probability greater than or equal to the predetermined probability threshold in a descending order of the door opening probabilities and/or the door closing probabilities, to obtain a number of highest ranking first time zones, the number being smaller than or equal to a predetermined number.

It can be understood that the predetermined number is a pre-set required number of the first time zones.

In an exemplary embodiment of the present disclosure, the processor may compare the door opening probability, or the door closing probability, or the door opening probability and the door closing probability with the predetermined probability threshold, select time zones each having a door opening probability or a door closing probability or the door opening probability and the door closing probability greater than or equal to the predetermined probability threshold, and sort the obtained time zones after selecting in a descending order of the probabilities to obtain the predetermined number of highest ranking first time zones. For example, there are four time zones each having the door opening probability or the door closing probability or the door opening probability and the door closing probability greater than or equal to the predetermined probability threshold, but the predetermined number is 3, and then 3 highest ranking time zones in a descending order of probabilities may be taken as the first time zones.

In an embodiment of the present disclosure, first the door opening probability and/or the door closing probability of each time zone is compared with the predetermined probability threshold, i.e., performing a first round of selecting, to obtain the time zones each having the door opening probability and/or the door closing probability greater than or equal to the predetermined probability threshold, and then the time zones after the first round of selecting are sorted in a descending order of the probabilities, i.e., performing a second round of selecting, to obtain a number of first time zones, the number being smaller than or equal to the predetermined number.

In a possible embodiment, said determining the first time zone from the plurality of time zones based on the door opening probability and/or the door closing probability and the predetermined probability threshold includes: sorting the time zones in a descending order of the door opening probabilities and/or the door closing probabilities, to obtain a number of highest ranking time zones, the number being smaller than or equal to a predetermined number; comparing a door opening probability and/or a door closing probability corresponding to each of the number of higest ranking time zones with the predetermined probability threshold; and filtering out one or more time zones each having a door opening probability and/or a door closing probability smaller than the predetermined probability threshold to obtain the first time zone.

In an exemplary embodiment of the present disclosure, the processor may first sort the time zones in a descending order of the door opening probabilities or in a descending order of the door closing probabilities or in a descending order of the door opening probabilities and the door closing probabilities, to obtain a number of highest ranking time zones, the number being smaller than or equal to the predetermined number, compare the door opening probability or the door closing probability or the door opening probability and the door closing probability corresponding to each of the number of highest ranking time zones with the predetermined probability threshold, and remove one or more time zones each having the door opening probability or the door closing probability or the door opening probability and the door closing probability smaller than the predetermined probability threshold to obtain the first time zone.

In an embodiment of the present disclosure, first the time zones are sorted in a descending order of the door opening probabilities and/or the door closing probabilities, i.e., performing a first round of selecting, to obtain one or more time zones satisfying the predetermined number, and then the door opening probability and/or the door closing probability of each of the one or more time zones after the first round of selecting is compaerd with the predetermined probability threshold, to obtain the first time zone satisfying the predetermined probability threshold.

In a possible embodiment, said controlling the dishwasher to start the drying function prior to the taking-out time point includes: controlling the dishwasher to start the drying function a predetermined time interval before the taking-out time point.

In an exemplary embodiment of the present disclosure, after the taking-out time point is predicted, the processor may control the dishwasher to start the drying function in advance the predetermined time interval (like 30 minutes) before the taking-out time point, to perform drying in advance.

In a possible embodiment, the method for controlling the dishwasher further includes: obtaining a current humidity inside the dishwasher; determining a drying time length of the dishwasher based on the current humidity and a target humidity; and controlling the dishwasher to perform drying based on the drying time length.

In an exemplary embodiment of the present disclosure, the processor may obtain the current humidity inside the dishwasher, i.e., a current humidity in a cavity of a dishwasher through a humidity detection device, determine the drying time length of the dishwasher based on the current humidity and the target humidity, and control the dishwasher to perform drying based on the drying time length.

In a possible embodiment, the predetermined time interval may be the same as the drying time length, i.e., after the drying time length is determined, the processor controls the dishwasher to start the drying function the drying time length before the taking-out time point, which can ensure that the tableware taken out by the user as soon as he or she opens the dishwasher is the tableware that has just been finished with drying.

In a possible embodiment, said determining the drying time length of the dishwasher based on the current humidity and the target humidity includes determining the drying time length of the dishwasher based on the following formula (3):

$$T = (H_e - H_s) * 100 / 53.5 \qquad \text{formula (3)}$$

where, $H_e$ is the target humidity, $H_s$ is the current humidity, and T is the drying time length.

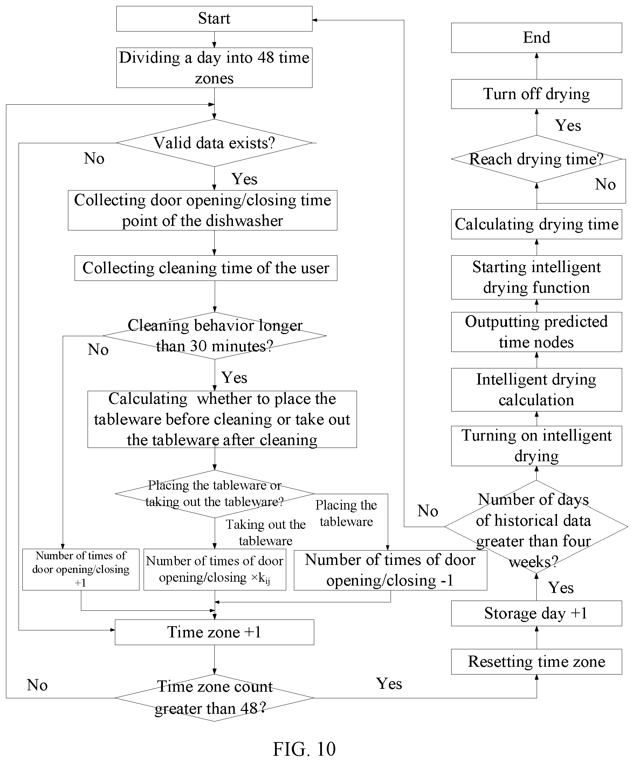

In a specific embodiment, FIG. 10 illustrates a schematic flowchart of another method for controlling the dishwasher according to an exemplary embodiment of the present disclosure. A control logic may be as shown in FIG. 10. When the user uses the dishwasher, firstly, the 24 hours of a day may be divided into 48 time zones each with 30 minutes, the number of times door opening/closing and the door opening/closing time length in each time zone may be counted, and a time point of the most recent cleaning behavior is recorded. According to analysis of the historical behavior data of the dishwasher, it is found that the tableware taking-out time after cleaning is shorter than the tableware placing-in behavior before cleaning. Meanwhile, the behavior before cleaning may be considered to be placing the tableware, and the behavior after cleaning may be regarded as taking out the tableware. Then, the number of times of door closing in each time zone is counted, and will be performed function weighting with $k_{ij}$ as time goes by. When the user uses the dishwasher for more than 4 weeks, an overall summed number of times of tableware taking-out are caculated for each time zone and then are normalized, to calculate a prediction probability $P_i$ for each time point. Three highest ranking time zones with the probabilities are taken after being sorted to be predetermined as time zones that are frequently used by the user. Moreover, the probability of each of the three highest ranking time zones must be greater than 20% (i.e., the predetermined probability threshold, which may be other other parameters and is determined according to the actual situation), and the time zone having a prediction probability smaller than 20% will be discarded. Therefore, a prediction for anti-moisture regaining is not necessarily three times per day. Then, drying is performed in advance through forward projection of a time period according to user's habit information. Calculation of the drying time T is automatically matched based on a humidity environment in the user's home, to achieve the optimal drying strategy, achieving energy conservation and power saving.

Overall calculation of a prediction algorithm may be designed as a function of plain Bayes, see the following formula (1):

$$P_i = \frac{\sum_1^d k_{ij} * m_i}{\sum_1^d \sum_1^n k_{ij} * m_i} \qquad \text{formula (1),}$$

where $k_{ij}$ is the first weight of the $i_{th}$ time zone on the $j_{th}$ day within the predetermined time cycle, $m_i$ is the corrected number of times of door opening and/or the corrected number of times of door closing corresponding to the $i_{th}$ time zone, $P_i$ is a door opening probability and/or a door closing probability of the $i_{th}$ time zone, n is the total number of the plurality of time zones (like 48), and d is the total number of days in the predetermined time cycle.

The determination of the first weight may be performed using a degree of habit weight mechanism, see formula (2) below.

$$k_{ij} = 1 + \left(\frac{i}{n} + \frac{j}{j+1}\right) \qquad \text{formula (2),}$$

where $k_{ij}$ is the first weight of the $i_{th}$ time zone on the $j_{th}$ day within the predetermined time cycle, and n is the total number of the plurality of time zones (like 48).

A user drying time matching function is shown in the following formula (3).

$$T = (H_e - H_s) * 100 / 53.5 \qquad \text{formula (3)}$$

where $H_e$ is the target humidity, $H_s$ is the current humidity, and T is the drying time.

The taking-out time point of the tableware in the dishwasher is predicted to be basically in line with a user's use time interval, i.e., the time interval is predicted to be basically coincides with user's time intervals in the morning, at noon, and in the evening for meal.

In the method for controlling the dishwasher according to the embodiments of the present disclosure, an intelligent anti-moisture regaining algorithm is obtained through training based on the user's dishwasher use habit, i.e., based on the user's historical behavior data. An algorithm for intelligently predicting the opening of the drying function is designed through the principle of a machine-learning time sequence algorithm. The algorithm is mainly designed to determine the time node at which the user often takes out the tableware, for performing drying in advance, by learning the user's use behavior of the dishwasher in the past predetermined time cylce (like 4 weeks), which includes information of the door opening behavior and door closing behavior of the dishwasher, a function use behavior, and a drying behavior, which prevents the tableware from being wet, and improves the user's use experience.

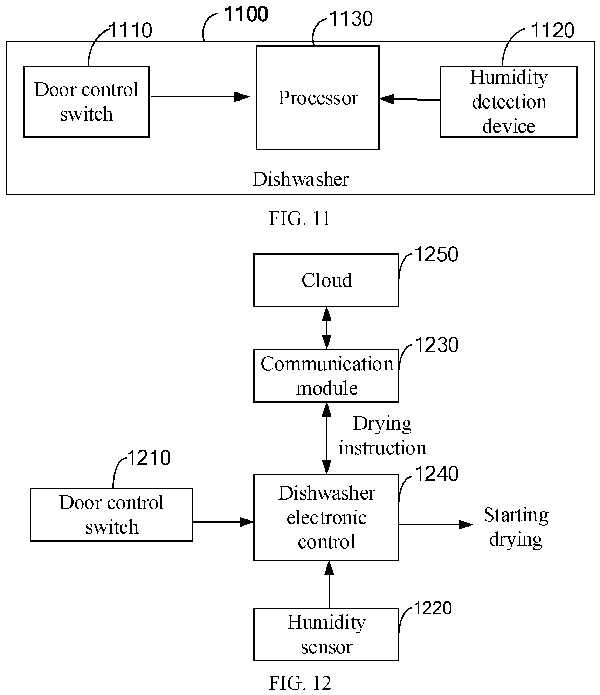

FIG. 11 shows a block diagram of a structure of dishwasher control according to an exemplary embodiment of the present disclosure. As shown in FIG. 11, the dishwasher 1100 includes a door controlled switch 1110, a humidity detection device 1120, and a processor 1130.

The door controlled switch 1110 is configured to detect a door opening state and/or a door closing state of the dishwasher and transmit information indicating the door opening state and/or the door closing state. The information is used for forming historical door opening data and/or historical door closing data.

The humidity detection device 1120 is configured to detect a humidity inside the dishwasher.

The processor 1130 is configured to perform all or some of the steps of the above method embodiments.

FIG. 12 is a block diagram of a structure of a system for controlling a dishwasher according to an exemplary embodiment of the present disclosure. As shown in FIG. 12, the system for controlling the dishwasher may at least include a door control switch 1210, a humidity sensor 1220, a communication module 1230, a dishwasher electronic control 1240 (i.e., a dishwasher controller), and a cloud 1250 (i.e., a server). The dishwasher electronic control 1240 may receive the door opening state and/or the door closing state of the dishwasher detected by the door control switch 1210, and may also receive the humidity inside the dishwasher detected by the humidity sensor 1220. The cloud 1250 has a moisture regaining prediction algorithm stored therein for predicting the taking-out time point of the tableware in the dishwasher, and transmits the drying instruction to the dishwasher electronic control 1240 through the communication module 1240. The dishwasher electronic control 1240 may start the drying function of the dishwasher after receiving the drying instruction.

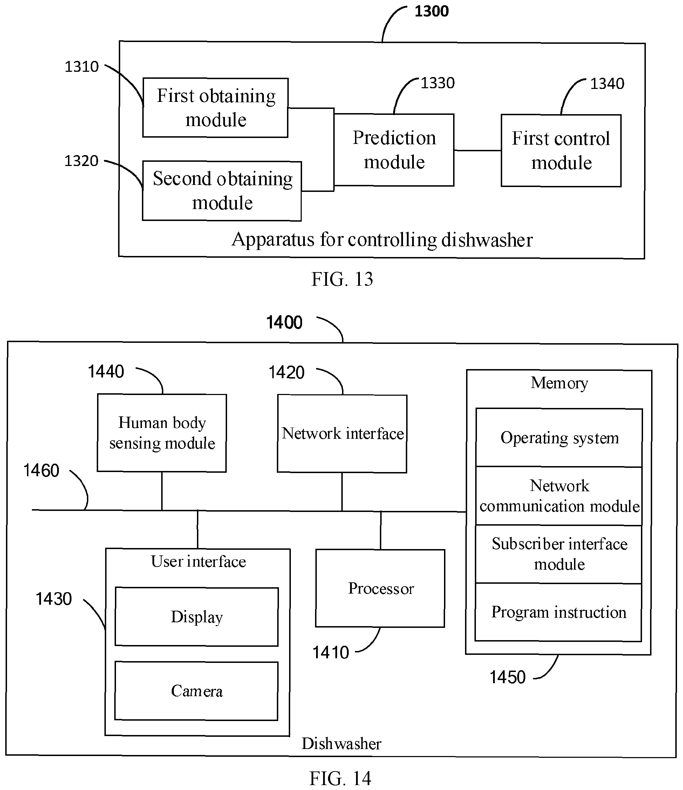

Next, FIG. 13 shows a schematic diagram of a structure of a apparatus for controlling a dishwasher according to an embodiment of the present disclosure. The above dishwasher includes a human body sensing module. As shown in FIG. 13, the apparatus for controlling the dishwasher 1300 includes a first obtaining module 1310, a second obtaining module 1320, a prediction module 1330, a first control module 1340.

The first obtaining module 1310 is configured to obtain an active time set in a predetermined time period. The active time set includes at least one active time instance, and each of the at least one active time instance is time at which an occurrence of a human body activity in a predetermined region of the dishwasher is sensed by a human body sensing module.

The second obtaining module 1320 is configured to obtain operation time of the dishwasher in the predetermined time period.

The prediction module 1330 is configured to predict a tableware taking-out time point of a user based on the active time set and the operation time.

The first control module 1340 is configured to control, at a target time point, the dishwasher to perform odor removal processing. The target time point is a first time length before the tableware taking-out time point.

In a possible implementation, the operation time includes the first time point at which the dishwasher starts to operate.

The prediction module 1330 includes a filtering out unit and a first prediction unit.

The filtering out unit is configured to filter out one or more active time instances within a second time length before the first time point from the active time set, to obtain the target active time set.

The first prediction unit is configured to predict the tableware taking-out time point of the user based on the target active time set.

In a possible implementation, the operation time further includes the second time point at which the operation of the dishwasher ends.

The first prediction unit includes a division subunit and a determination subunit.

The division subunit is configured to divide the target active time set into a first target active time set and a second target active data set based on the second time point. The first target active time set includes one or more active time instances within the third time length after the second time point in the target active time set, and the second target active data set includes one or more active time instances not within the third time length after the second time point in the target active time set.

The determination subunit is configured to determine the tableware taking-out time point of the user based on the first target active time set and a first target weight corresponding to the first target active time set, the second target active time set and a second target weight corresponding to the second target active time set.

In a possible implementation, the first target weight is greater than the second target weight.

In a possible implementation, the dishwasher further includes a door assembly.

The above-described apparatus for controlling the dishwasher 1300 further includes a third obtaining module configured to obtain opening time of the door assembly within the predetermined time period.

The prediction module 1330 includes a second prediction unit configured to predict the tableware taking-out time point of the user based on the active time set, the operation time, and the opening time.

In a possible implementation, the operation time includes the first time point at which the dishwasher starts to operate.

The second prediction unit includes a filtering out sub-unit and a prediction sub-unit.

The filtering out sub-unit is configured to filter out opening time within the fourth time length before the first time point in the opening time of the door assembly to obtain target opening time.

The prediction sub-unit is configured to predict the tableware taking-out time point of the user based on the active time set, the operation time, and the target opening time.

In a possible implementation, the above-described apparatus for controlling the dishwasher 1300 further includes a second control module configured to control the dishwasher to end the odor removal processing after a time length during which the dishwasher performs the odor removal processing reaches a fifth time length. The fifth time length is smaller than or equal to the first time length.

The division of the respective modules in the above-mentioned apparatus for controlling the dishwasher is only used for illustration. In other embodiments, the apparatus for controlling the dishwasher may be divided into different modules as needed, to complete all or part of the functions of the apparatus for controlling the dishwasher. The respective modules in the apparatus for controlling the dishwaser provided in the embodiments of the present disclosure may be embodied in the form of a computer program. The computer program may run on a terminal or server. The program module constituted by the computer program may be stored on a memory of the terminal or server. When the computer program is executed by the processor, all or some of the steps of the method for controlling the dishwasher described in the embodiments of the present disclosure are implemented.

Referring to FIG. 14, a schematic diagram of a structure of a dishwasher is provided according to the embodiments of the present disclosure. As shown in FIG. 14, the dishwasher 1400 may include: at least one processor 1410, at least one network interface 1420, a user interface 1430, a body sensing module 1440, a memory 1450, and at least one communication bus 1460.

The communication bus 1460 is configured to realize connection and communication between these components.

The network interface 1420 may include, but is not limited to, a low-power-consumption Bluetooth module, a near field communication (NFC) module, a wireless fidelity (Wi-Fi) module, and the like.

The user interface 1430 may include a display and a camera. In another exemplary embodiment of the present disclosure, the user interface 1430 may further include a standard wired interface and a standard wireless interface.

The human body sensing module 1440 is configured to sense the occurrence of the human body activity in the predetermined region of the dishwasher 1400, and may include, but is not limited to, a microwave radar sensor, a pyroelectric sensor, and the like. The predetermined region may be, but is not limited to, the region with the distance of smaller than or equal to 0.2 meters, 0.1 meters, or the like from the dishwasher 1400.

The memory 1450 stores information inputted through the user interface 1430 and information such as the tableware taking-out time point, the target time point, and the executable program codes obtained by the processing of the processor 1410.

The processor 1410 may include one or more processing cores. The processor 1410 utilizes various interfaces and wiring to connect various portions in the dishwasher 1400 to perform various functions and process data of the dishwasher 1400 by running or executing instructions, programs, code sets, or instruction sets stored in the memory 1450, and by invoking data stored in the memory 1450. In another exemplary embodiment of the present disclosure, the processor 1410 may be implemented by using at least one hardware form of digital signal processing (DSP), field-programmable gate array (FPGA), programmable logic array (PLA). The processor 1410 may integrate one or a combination of a central processing unit (CPU), a graphics processing unit (GPU), or a modem. The CPU mainly handles an operating system, a user interface, an applications, and the like. The GPU is used to be responsible for rendering and drawing of a content needs to be displayed by the display. The modem is configured to handle wireless communication. It can be understood that the above modem may not be integrated into the processor 1410, and be implemented with a chip alone.

The memory 1450 may include a random access memory (RAM) or a read-only memory (ROM). In another exemplary embodiment of the present disclosure, the memory 1450 includes a non-transitory computer-readable storage medium. The memory 1450 may store instructions, programs, codes, code sets, or instruction sets. The memory 1450 may include a storage program area and a storage data area. The storage program area may store instructions for implementing the operating system, instructions for at least one function (like an obtaining function, a prediction function, and a control function), instructions for implementing each of the above method embodiments, and the like. The storage data area may store data involved in each of the above method embodiments and the like. In another exemplary embodiment of the present disclosure, the memory 1450 may be at least one storage device located away from the aforementioned processor 1410. As shown in FIG. 14, an operating system, a network communication module, a user interface module, and program instructions may be included in the memory 1450 as a computer storage medium.

In the dishwasher 1400 shown in FIG. 14, the user interface 1430 is mainly used to provide an interface for the user to input, to obtain data inputted by the user; and the processor 1410 may be configured to invoke the program instructions stored in the memory 1450 and specifically perform the following operations: obtaining an active time set in a predetermined time period; obtaining operation time of the dishwasher in the predetermined time period; predicting a tableware taking-out time point of a user based on the active time set and the operation time; and controlling, at a target time point, the dishwasher to perform odor removal processing. The active time set includes at least one active time instance, and each of the at least one active time instance is time at which an occurrence of a human body activity in a predetermined region of the dishwasher is sensed by the human body sensing module 1440. The target time point is a first time length before the tableware taking-out time point.

In some possible embodiments, the operation time includes a first time point at which the dishwasher starts to operate. The processor 1410, when performing the prediction of the tableware taking-out time point of the user based on the active time set and the operation time, is specifically configured to: filter out one or more active time instances within a second time length before the first time point from the active time set to obtain a target active time set; and predict the tableware taking-out time point of the user based on the target active time set.

In some possible embodiments, the operation time further includes a second time point at which the operation of the dishwasher ends. The processor 1410, when executing the prediction of the tableware taking-out time point of the user based on the target active time set, is specifically configured to: divide the target active time set into a first target active time set and a second target active data set based on the second time point; and determine the tableware taking-out time point of the user based on the first target active time set and a first target weight corresponding to the first target active time set, the second target active time set and a second target weight corresponding to the second target active time set. The first target active time set includes one or more active time instances within a third time length after the second time point in the target active time set, and the second target active data set includes one or more active time instances not within the third time length after the second time point in the target active time set.

In some possible embodiments, the first target weight is greater than the second target weight.

In some possible embodiments, the above-described dishwasher further includes a door assembly. The processor 1410, before executing the prediction of the tableware taking-out time point of the user based on the active time set and the operation time, is further configured to obtain opening time of the door assembly in the predetermined time period; and the processor 1410, when performing the prediction of the tableware taking-out time point of the user based on the active time set and the operation time, is specifically configured to predict the tableware taking-out time point of the user based on the active time set, the operation time, and the opening time.

In some possible embodiments, the operation time includes a first time point at which the dishwasher starts to operate. The processor 1410, when performing the prediction of the tableware taking-out time point of the user based on the active time set, the operation time, and the opening time, is specifically configured to: filter out opening time within a fourth time length before the first time point in the opening time of the door assembly to obtain target opening time; and predict the tableware taking-out time point of the user based on the active time set, the operation time, and the target opening time.

In some possible embodiments, the processor 1410, after performing the operation of controlling the dishwasher to perform the odor removal processing, is further configured to control the dishwasher to end the odor removal processing after a time length during which the dishwasher performs the odor removal processing reaches a fifth time length. The fifth time length is smaller than or equal to the first time length.

The embodiments of the present disclosure also provide a computer storage medium, storing a plurality of instructions. The plurality of instructions, when run on the computer or the processor, cause the computer or the processor to perform one or more steps of any of the above methods. If constituent modules of the apparatus for controlling the dishwasher are realized in a form of functional software units and are sold or used as separate products, the constituent modules can be stored in the storage medium.

In the above embodiments, the functions described in the embodiments of the present disclosure may be implemented fully or partially by software, hardware, firmware or any other combination. When implemented by software, it is possible to implement the functions fully or partially in a form of a computer program product. The computer program product includes one or more computer instructions. When the computer program instructions are loaded and executed by the computer, procedures or functions according to embodiments of the present disclosure are fully or partially generated. The computer may be a general-purpose computer, a special-purpose computer, a computer network, or any other programmable device. The computer instructions may be stored in the computer-readable storage medium, or may be transmitted through the computer-readable storage medium. For example, the computer instructions may be transmitted from one website, computer, server, or data center to another website, computer, server, or data center in a wired manner (for example, via coaxial cables, fiber optics, or digital subscriber line (DSL)) or in a wireless manner (for example, via infrared, wireless, or microwave). The computer-readable storage medium may be any available medium that are accessible by the computer, or a data storage device such as a server or a data center integrated with one or more available medium. The available medium may be magnetic medium (for example, floppy disk, hard disk, and tape), optical medium (for example, digital video disc (DVD)), or semiconductor medium (for example, solid state disk (SSD)).

A person of ordinary skill in the art may understand that all or some of the processes in the method in the above embodiments may be implemented by the computer program instructing related hardware. The program may be stored in the computer-readable storage medium. When the program is executed, the processes of the embodiments of the above methods may be included. The foregoing storage medium includes various mediums that can store program codes, such as ROM, RAM, magnetic disk, or optical disk. The technical features described in the embodiments and implementations of the present disclosure can be combined arbitrarily without mutual contradiction.

The above-mentioned embodiments are merely preferred embodiments of the present disclosure for description, and are not intended to limit the scope of the present disclosure. Various modifications and improvements made by a person of ordinary skill in the art to the technical solutions of the present disclosure shall fall within the protection scope determined by the claims of the present disclosure without departing from the design spirit of the present disclosure.

## Claims

1. A method for controlling a dishwasher comprising a human body sensing module, the method comprising:

   obtaining an active time set in a predetermined time period, the active time set comprising at least one active time instance at which an occurrence of a human body activity in a predetermined region of the dishwasher is sensed by the human body sensing module;
   obtaining operation time of the dishwasher in the predetermined time period;
   predicting a tableware taking-out time point of a user based on the active time set and the operation time; and
   controlling, at a target time point, the dishwasher to perform odor removal processing, the target time point being a first time length before the tableware taking-out time point.

2. The method according to claim 1, wherein the operation time comprises a first time point when the dishwasher starts to operate; and
   said predicting the tableware taking-out time point of the user based on the active time set and the operation time comprises:

filtering out one or more active time instances within a second time length before the first time point from the active time set to obtain a target active time set; and

predicting the tableware taking-out time point of the user based on the target active time set.

3. The method according to claim 2, wherein the operation time further comprises a second time point when the operation of the dishwasher ends;

said predicting the tableware taking-out time point of the user based on the target active time set comprises:

dividing the target active time set into a first target active time set and a second target active data set based on the second time point, the first target active time set comprising one or more active time instances within a third time length after the second time point in the target active time set, and the second target active data set comprising one or more active time instances not within the third time length after the second time point in the target active time set; and

determining the tableware taking-out time point of the user based on the first target active time set and a first target weight corresponding to the first target active time set, the second target active time set and a second target weight corresponding to the second target active time set.

4. The method according to claim 3, wherein the first target weight is greater than the second target weight.

5. The method according to any one of claims 1 to 4, wherein the dishwasher further comprises a door assembly; and

the method further comprises, prior to predicting the tableware taking-out time point of the user based on the active time set and the operation time:

obtaining opening time of the door assembly within the predetermined time period; and

said predicting the tableware taking-out time point of the user based on the active time set and the operation time comprises:

predicting the tableware taking-out time point of the user based on the active time set, the operation time, and the opening time.

6. The method according to claim 5, wherein the operation time comprises a first time point when the dishwasher starts to operate;

said predicting the tableware taking-out time point of the user based on the active time set, the operation time, and the opening time comprises:

filtering out opening time within a fourth time length before the first time point in the opening time of the door assembly to obtain target opening time; and

predicting the tableware taking-out time point of the user based on the active time set, the operation time, and the target opening time.

7. The method according to any one of claims 1 to 6, further comprising, subsequent to controlling the dishwasher to perform the odor removal processing:

controlling the dishwasher to end the odor removal processing after a time length during which the dishwasher performs the odor removal processing reaches a fifth time length, the fifth time length being smaller than or equal to the first time length.

8. A method for controlling a dishwasher, comprising:

obtaining historical behavior data of the dishwasher in a predetermined time cycle;

predicting a taking-out time point of tableware in the dishwasher based on the historical behavior data; and

controlling the dishwasher to start a drying function before the taking-out time point.

9. The method according to claim 8, wherein the historical behavior data comprises historical door opening data and/or historical door closing data and historical cleaning data; the historical door opening data and/or the historical door closing data comprising one or more historical door opening time points and/or one or more historical door closing time points; and

said obtaining the historical behavior data of the dishwasher in the predetermined time cycle comprises:

dividing each day in the predetermined time cycle into a plurality of time zones;

obtaining one or more historical door opening time points and/or one or more historical door closing time points and historical cleaning data of the dishwasher in each of the plurality of time zones; and

determining a number of times of historical door opening and/or a number of times of historical door closing in each of the plurality of time zones based on the one or more historical door opening time points and/or the one or more historical door closing time points in the time zone.

10. The method according to claim 9, wherein said predicting the taking-out time point of the tableware in the dishwasher based on the historical behavior data comprises:

obtaining a corrected number of times of door opening and/or a corrected number of times of door closing corresponding to each of the plurality of time zones based on the number of times of historical door opening and/or the number of times of historical door closing and the historical cleaning data;

determining a door opening probability and/or a door closing probability of each of the plurality of time zones based on the corrected number of times of door opening and/or the corrected number of times of door closing; and

determining a first time zone from the plurality of time zones based on the door opening probability and/or the door closing probability and a predetermined probability threshold, and obtaining the taking-out time point of the tableware in the dishwasher based on the first time zone, wherein the first time zone is related to the taking-out time point of the tableware in the dishwasher.

11. The method according to claim 10, wherein the historical cleaning data comprises a historical cleaning time length; and

said obtaining the corrected number of times of door opening and/or the corrected number of times of door closing corresponding to each of the plurality of time zones based on the number of times of historical door opening and/or the number of times of historical door closing and the historical cleaning data comprises:

when the historical cleaning time length is greater than or equal to a predetermined cleaning time length, determining that the historical door opening data and/or the historical door closing data corresponds to a tableware taking-out behavior or a tableware placing-in behavior; and

in response to the historical door opening data and/or the historical door closing data corresponding to the tableware taking-out behavior, multiplying the number of times of historical door opening and/or the number of times of door closing with a first weight to obtain the corrected number of times of door opening and/or the corrected number of times of door closing corresponding to each of the plurality of time zones, wherein the first weight is greater than a first predetermined parameter and is related to a position of each time zone in the plurality of time zones and the number of a day in the predetermined time cycle where each time zone is located; and

in response to the historical door opening data and/or the historical door closing data corresponding to the tableware placing-in behavior, subtracting a second predetermined parameter from the number of times of historical door opening and/or the number of times of historical door closing, to obtain the corrected number of times of door opening and/or the corrected number of times of door closing corresponding to each of the plurality of time zones.

12. The method according to claim 11, wherein said obtaining the corrected number of times of door opening times and/or the corrected number of times of door closing corresponding to each of the plurality of time zones based on the number of times of historical door opening and/or the number of times of historical door closing and the historical cleaning data further comprises:

when the historical cleaning time length is smaller than the predetermined cleaning time length, adding a third predetermined parameter to the number of times of historical door opening and/or the number of times of historical door closing to obtain the corrected number of times of door opening and/or the corrected number of times of door closing corresponding to each of the plurality of time zones.

13. The method according to claim 11, wherein the historical cleaning data comprises a historical cleaning starting time point and a historical cleaning ending time point; and

said determining that the historical door opening data and/or the historical door closing data corresponds to the tableware taking-out behavior or the tableware placing-in behavior comprises:

when the historical door opening time point and/or the historical door closing time point is later than the historical cleaning ending time point, determining that the historical door opening data and/or the historical door closing data corresponds to the tableware taking-out behavior; and

when the historical door opening time point and/or the historical door closing time point is earlier than the historical cleaning starting time point, determining that the historical door opening data and/or the historical door closing data corresponds to the tableware placing-in behavior.

14. The method according to any one of claims 11 to 13, wherein said determining that the historical door opening data and/or the historical door closing data corresponds to the tableware taking-out behavior or the tableware placing-in behavior comprises:

determining a time length between the historical door opening time point and the historical door closing time point based on the historical door opening time point and the historical door closing time point;
when the time length is greater than or equal to a first time length threshold, determining that the historical door opening data and/or the historical door closing data corresponds to the tableware placing-in behavior; and
when the time length is smaller than the first time length threshold, determining that the historical door opening data and/or the historical door closing data corresponds to the tableware taking-out behavior.

15. The method according to any one of claims 10 to 14, wherein said determining the door opening probability and/or the door closing probability of each of the plurality of time zones according to the corrected number of times of door opening and/or the corrected number of times of door closing comprises:

determining a product value of the corrected number of times of door opening and/or the corrected number of times of door closing and a first weight, wherein the first weight is greater than a first predetermined parameter and is related to a position of the time zone in the plurality of time zones and the number of a day in the predetermined time cycle where each time zone is located;
adding product values of the plurality of time zones to obtain a time zone summed number of times corresponding to the plurality of time zones;
adding the time zone summed number of times to obtain a time cycle summed number of times for all the time zones in the predetermined time cycle; and
determining a ratio of the time zone summed number of times to the time cycle summed number of times to obtain the door opening probability and/or the door closing probability of each of the plurality of time zones.

16. The method according to any one of claims 10 to 15, wherein said determining the first time zone from the plurality of time zones based on the door opening probability and/or the door closing probability and the predetermined probability threshold comprises:

comparing the door opening probability and/or the door closing probability with the predetermined probability threshold; and
sorting the time zones each having a door opening probability and/or a door closing probability greater than or equal to the predetermined probability threshold in a descending order of the door opening probabilities and/or the door closing probabilities, to obtain a number of highest ranking first time zones, the number being smaller than or equal to a predetermined number.

17. The method according to any one of claims 10 to 16, wherein said determining the first time zone from the plurality of time zones based on the door opening probability and/or the door closing probability and the predetermined probability threshold comprises:

sorting the time zones in a descending order of the door opening probabilities and/or the door closing probabilities, to obtain a number of highest ranking time zones, the number being smaller than or equal to a predetermined number;
comparing a door opening probability and/or a door closing probability corresponding to each of the number of highest ranking time zones with the predetermined probability threshold; and
removing one or more time zones each having a door opening probability and/or a door closing probability smaller than the predetermined probability threshold to obtain the first time zone.

18. The method according to any one of claims 8 to 17, wherein said controlling the dishwasher to start the drying function prior to the taking-out time point comprises:
controlling the dishwasher to start the drying function a predetermined time interval before the taking-out time point.

19. The method according to any one of claims 8 to 18, further comprising:

obtaining a current humidity inside the dishwasher;

determining a drying time length of the dishwasher based on the current humidity and a target humidity; and

controlling the dishwasher to perform drying based on the drying time length.

20. An apparatus for controlling a dishwasher, comprising:

a first obtaining module configured to obtain an active time set in a predetermined time period, the active time set comprising at least one active time instance, and each of the at least one active time instance being time at which an occurrence of a human body activity in a predetermined region of the dishwasher is sensed by a human body sensing module;

a second obtaining module configured to obtain operation time of the dishwasher in the predetermined time period;

a prediction module configured to predict a tableware taking-out time point of a user based on the active time set and the operation time; and

a first control module configured to control, at a target time point, the dishwasher to perform odor removal processing, the target time point being a first time length before the tableware taking-out time point.

21. An apparatus for controlling a dishwasher, comprising:

a fourth obtaining module configured to obtain historical behavior data of the dishwasher in a predetermined time period; and

a prediction module configured to predict a taking-out time point of tableware in the dishwasher based on the historical behavior data; and

a third control module configured to control the dishwasher to start a drying function before the taking-out time point.

22. A dishwasher, comprising:

a memory storing executable program codes; and

a processor connected to the memory,

wherein the processor is configured to perform, when running a program corresponding to the executable program codes by reading the executable program codes stored in the memory, the method according to any one of claims 1 to 19.

23. A dishwasher, comprising:

a door control switch configured to detect a door opening state and/or a door closing state of the dishwasher and transmit information indicating the door opening state and/or the door closing state, the information being used for forming historical door opening data and/or historical door closing data;

a humidity detection device configured to detect a humidity inside the dishwasher; and

a processor configured to perform the method according to any one of claims 8 to 19.

24. A computer storage medium, storing a plurality of instructions, the plurality of instructions being adapted to be loaded by a processor for performing steps of the method according to any one of claims 1 to 19.

```
                    ┌─────────────────────┐
                    │                     │
                    │       Server        │
                    │                     │
                    └─────────────────────┘
                              ↑↓
┌──────────────────────────────────────────────────────────────────┐
│  ┌──────────────────┐   ┌───────────────┐   ┌──────────────────┐  │
│  │   Human body     │──▶│ Control panel │──▶│   Odor removal   │  │
│  │ sensing module   │   │               │   │     module       │  │
│  └──────────────────┘   └───────────────┘   └──────────────────┘  │
│                          Dishwasher                                │
└──────────────────────────────────────────────────────────────────┘
```

FIG. 1

```
S201                                        Obtaining operation time of the        S202
┌────────────────────────────────┐         dishwasher in the predetermined
│ Obtaining an active time set in a │       ┌──────────────────────────────────┐
│   predetermined time period    │         │ Obtaining operation time of the  │
└────────────────────────────────┘         │ dishwasher in the predetermined  │
                │                           │         time period              │
                │                           └──────────────────────────────────┘
                │                                         │
                └────────────────────┬────────────────────┘
                                     ▼
                    ┌──────────────────────────────────────┐    S203
                    │ Predicting a tableware taking-out time point │
                    │ of a user based on the active time set and the │
                    │           operation time             │
                    └──────────────────────────────────────┘
                                     ▼
                    ┌──────────────────────────────────────┐
                    │ Controlling, at a target time point, the │
                    │   dishwasher to perform odor removal    │    S204
                    │ processing, the target time point being a first │
                    │ time length before the tableware taking-out │
                    │           time point                 │
                    └──────────────────────────────────────┘
```

FIG. 2

```
┌─────────────────────┐        ┌─────────────────────┐
│  Operation time (first │        │   Active time set    │
│     time point)      │        │                      │
└──────────┬──────────┘        └──────────┬──────────┘
           └───────────────┬──────────────┘
                           ▼
              ◇─────────────────────────────◇
   Yes   ◇   Whether an active time instance is   ◇
 ◄───────   within a second time length before the
          ◇        first time point              ◇
              ◇─────────────┬───────────────◇
                            │ No
┌────────────────────────┐  ▼
│  Filtering out an active time │  ┌─────────────────────┐
│ instance within a second time │  │  Target active time set │
│ length before the first time  │  └──────────┬──────────┘
│          point           │                │ Predicting
└────────────────────────┘                ▼
                                ┌─────────────────────┐
                                │ Tableware taking-out time │
                                │         point         │
                                └─────────────────────┘
```

FIG. 3

Operation time
(operation starts-first time point)
(operation ends-second time point)

Active time set

Whether an active time
is within a second time
length prior to the first
time point

Yes

Filtering out an active time
instance within a second
time length before the first
time point

No

Target active time set

Whether an active time is
within a third time length
after the second time point

Yes

No

First target
weight

First target active
time set

Second target active
time set

Second
target weight

⊗

⊗

Predicting

Tableware taking-out
time point

FIG. 4

Active time    First time point    Second time point

530      530   510

First day 0 2 4 6 8 10 12 14 16 18 20 22 24

530

Second day 0 2 4 6 8 10 12 14 16 18 20 22 24

530

Third day 0 2 4 6 8 10 12 14 16 18 20 22 24

530   510      520

Fourth day 0 2 4 6 8 10 12 14 16 18 20 22 24

530

Fifth day 0 2 4 6 8 10 12 14 16 18 20 22 24

530 510    520  530

Sixth day 0 2 4 6 8 10 12 14 16 18 20 22 24

530

Seventh day 0 2 4 6 8 10 12 14 16 18 20 22 24

FIG. 5

S601
Obtaining an active time set in a predetermined time period

S602
Obtaining operation time of the dishwasher in the predetermined time period

S603
Obtaining opening time of the door assembly within the predetermined time period

S604
Predicting the tableware taking-out time point of the user based on the active time set, the operation time, and the opening time

S605
Controlling, at a target time point, the dishwasher to perform odor removal processing, the target time point being a first time length before the tableware taking-out time point

FIG. 6

S701 — Obtaining an active time set in a predetermined time period

S702 — Obtaining operation time of the dishwasher in the predetermined time period

S703 — Predicting a tableware taking-out time point of a user based on the active time set and the operation time

S704 — Controlling, at a target time point, the dishwasher to perform odor removal processing, the target time point being a first time length before the tableware taking-out time point

S705 — Determining whether a time length during which the dishwasher performs the odor removal processing reaches a fifth time length

Yes

S707 — Controlling the dishwasher to end the odor removal processing, the fifth time length being smaller than or equal to the first time length

No

S706 — Controlling the dishwasher to continue the odor removal processing

FIG. 7

S802 — Obtaining historical behavior data of a dishwasher in a predetermined time cycle

S804 — Predicting a taking-out time point of tableware in the dishwasher based on the historical behavior data

S806 — Controlling the dishwasher to start a drying function prior to the taking-out time point

FIG. 8

S902

Obtaining a corrected number of times of door opening and/or a corrected number of times of door closing corresponding to each of the plurality of time zones based on the number of times of historical door opening and/or the number of times of historical door closing and the historical cleaning data

S904

Determining a door opening probability and/or a door closing probability of each time zone based on the corrected number of times of door opening and/or the corrected number of times of door closing

S906

Determining a first time zone from the plurality of time zones based on the door opening probability and/or the door closing probability and a predetermined probability threshold, and obtaining the taking-out time point of the tableware in the dishwasher based on the first time zone, wherein the first time zone is related to the taking-out time point of the tableware in the dishwasher

FIG. 9

Start

Dividing a day into 48 time zones

Valid data exists? — No

Yes

Collecting door opening/closing time point of the dishwasher

Collecting cleaning time of the user

Cleaning behavior longer than 30 minutes? — No

Yes

Calculating whether to place the tableware before cleaning or take out the tableware after cleaning

Placing the tableware or taking out the tableware?

Taking out the tableware — Placing the tableware

Number of times of door opening/closing +1

Number of times of door opening/closing ×$k_{ij}$

Number of times of door opening/closing -1

Time zone +1

Time zone count greater than 48? — No / Yes

End

Turn off drying

Yes

Reach drying time? — No

Calculating drying time

Starting intelligent drying function

Outputting predicted time nodes

Intelligent drying calculation

Turning on intelligent drying

Number of days of historical data greater than four weeks? — No / Yes

Storage day +1

Resetting time zone

FIG. 10

1100

1110
1130
1120

Door control
switch

Processor

Humidity
detection
device

Dishwasher

FIG. 11

1250
Cloud

1230
Communication
module

Drying
instruction

1210
Door control
switch

1240
Dishwasher
electronic
control

Starting
drying

1220
Humidity
sensor

FIG. 12

1300

1310

First obtaining module

1320

Second obtaining module

1330

Prediction module

1340

First control module

Apparatus for controlling dishwasher

FIG. 13

1400

1440

Human body sensing module

1420

Network interface

Memory

Operating system

Network communication module

Subscriber interface module

Program instruction

1460

1430

User interface

Display

Camera

Processor

1410

1450

Dishwasher

FIG. 14

## INTERNATIONAL SEARCH REPORT

| International application No. |
| --- |
| **PCT/CN2023/072839** |

**A. CLASSIFICATION OF SUBJECT MATTER**

A47L15/00(2006.01)i

According to International Patent Classification (IPC) or to both national classification and IPC

**B. FIELDS SEARCHED**

Minimum documentation searched (classification system followed by classification symbols)

A47L

Documentation searched other than minimum documentation to the extent that such documents are included in the fields searched

Electronic data base consulted during the international search (name of data base and, where practicable, search terms used)

CNTXT, ENTXTC, VEN, USTXT, CJFD, IEEE: 洗碗机, 消毒柜, 餐具, 碗, 碟, 时间, 时刻, 取, 拿, 用, 预测, 预计, 推测, 自动, 净味, 烘干, 暖, 预热, 消毒, 传感, 感应, 人体, 用户; dishwasher, cabinet, dishware, bowl, time, get, forecast, automatic, clean+, dry+, warm+, disinfect+, sens+, user.

**C. DOCUMENTS CONSIDERED TO BE RELEVANT**

| Category* | Citation of document, with indication, where appropriate, of the relevant passages | Relevant to claim No. |
| --- | --- | --- |
| X | CN 111839396 A (FOSHAN BEST ELECTRICAL APPLIANCE TECHNOLOGY CO., LTD.) 30 October 2020 (2020-10-30) description, paragraphs [0032]-[0051] | 8-19, 21-24 |
| X | CN 110367897 A (NINGBO FOTILE KITCHENWARE CO., LTD.) 25 October 2019 (2019-10-25) description, paragraphs [0054]-[0100] | 8-19, 21-24 |
| X | CN 110251034 A (FOSHAN BEST ELECTRICAL APPLIANCE TECHNOLOGY CO., LTD.) 20 September 2019 (2019-09-20) description, paragraphs [0027]-[0042] | 8-19, 21-24 |
| X | CN 109828479 A (NINGBO FOTILE KITCHENWARE CO., LTD.) 31 May 2019 (2019-05-31) description, paragraphs [0024]-[0032] | 8-19, 21-24 |

☑ Further documents are listed in the continuation of Box C.    ☑ See patent family annex.

| * Special categories of cited documents: |
| --- |

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **10 April 2023** | **23 April 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT

| | International application No. |
|---|---|
| | **PCT/CN2023/072839** |

**C. DOCUMENTS CONSIDERED TO BE RELEVANT**

| Category* | Citation of document, with indication, where appropriate, of the relevant passages | Relevant to claim No. |
|---|---|---|
| X | 刘亚涛等 (LIU, Yatao et al.). "基于机器学习的消毒柜智能暖碗算法研究 (Non-official translation: Research on Intelligent Dish Warming Algorithm of Disinfection Cabinet based on Machine Learning)" *2021年中国家用电器技术大会论文集 (Non-official translation: Proceedings of 2021 China Household Electrical Appliance Technology Conference)*, 18 October 2021 (2021-10-18), pp. 1386-1392 | 8-19, 21-24 |
| Y | CN 111839396 A (FOSHAN BEST ELECTRICAL APPLIANCE TECHNOLOGY CO., LTD.) 30 October 2020 (2020-10-30) description, paragraphs [0032]-[0051] | 1-7, 20 |
| Y | CN 111839397 A (FOSHAN BEST ELECTRICAL APPLIANCE TECHNOLOGY CO., LTD.) 30 October 2020 (2020-10-30) description, paragraphs [0029]-[0046] | 1-7, 20 |
| A | CN 110353593 A (NINGBO FOTILE KITCHENWARE CO., LTD.) 22 October 2019 (2019-10-22) entire document | 1-24 |
| A | US 2020178755 A1 (BSH HAUSGERAETE GMBH) 11 June 2020 (2020-06-11) entire document | 1-24 |
| A | CN 112790691 A (QINGDAO HAIER DISHWASHER CO., LTD. et al.) 14 May 2021 (2021-05-14) entire document | 1-24 |

Form PCT/ISA/210 (second sheet) (July 2022)

**INTERNATIONAL SEARCH REPORT**
Information on patent family members

International application No.

**PCT/CN2023/072839**

| Patent document cited in search report | | | Publication date (day/month/year) | Patent family member(s) | | | Publication date (day/month/year) |
|---|---|---|---|---|---|---|---|
| CN | 111839396 | A | 30 October 2020 | CN | 111839396 | B | 02 November 2021 |
| CN | 110367897 | A | 25 October 2019 | | None | | |
| CN | 110251034 | A | 20 September 2019 | CN | 110251034 | B | 06 July 2021 |
| CN | 109828479 | A | 31 May 2019 | CN | 109828479 | B | 16 July 2021 |
| CN | 111839397 | A | 30 October 2020 | CN | 111839397 | B | 01 February 2022 |
| CN | 110353593 | A | 22 October 2019 | CN | 110353593 | B | 04 June 2021 |
| US | 2020178755 | A1 | 11 June 2020 | WO | 2019015989 | A1 | 24 January 2019 |
| | | | | EP | 3654818 | A1 | 27 May 2020 |
| | | | | DE | 102017212323 | A1 | 24 January 2019 |
| | | | | CN | 110913741 | A | 24 March 2022 |
| CN | 112790691 | A | 14 May 2021 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210094276